# EUROPEAN PATENT APPLICATION

(11) **EP 3 091 473 A1**
(43) Date of publication of application: **09.11.2016**
(21) Application number: 16172188.1
(22) Date of filing: 18.05.2011
(51) Int. Cl.: G06K 5/00, G06F 3/041, G06F 3/044, G06Q 20/34, G07F 7/08

(54) **SYSTEMS AND METHODS FOR CARDS AND DEVICES OPERABLE TO COMMUNICATE VIA LIGHT PULSES AND TOUCH SENSITIVE DISPLAYS**

(30) Priority: 18.05.2010 US 345659 P; 18.05.2010 US 345649 P
(62) Divisional of application: 11784196.5
(71) Applicant: Dynamics Inc., Cheswick, PA 15024 (US)
(72) Inventor: MULLEN, Jeffrey D., Pittsburgh, PA Pennsylvania PA15232 (US); HARTWICK, David J., Aliquippa, PA Pennsylvania PA 15001 (US); RIGATTI, Christopher J., Pittsburgh, PA Pennsylvania PA 15212 (US); YEN, Philip W., Cupertino, CA California CA 95014 (US)
(74) Representative: Rooney, John-Paul

(57) **Abstract**

A card is provided with a touch transmitter operable to electrically communicate touch signals to a touch-sensitive screen such as a capacitive touch sensitive screen. In doing so, for example, a card may directly communicate with a mobile telephonic device or portable computer (e.g., a tablet computer). A card is provided with a light sensor operable to receive information via light emitted from a display screen or another source of light. Accordingly, a mobile telephonic device or portable computer (e.g., tablet computer) may communicate information to a card via light pulses. Information communicated via light may include, for example, points balances, credit balances, debit balances, transaction history, software updates, coupons, promotions, advertisements or any other type of information.

## Description

### Background of the Invention

This invention relates to magnetic cards and devices and associated payment systems.

### Summary of the Invention

A card may include a dynamic magnetic communications device. Such a dynamic magnetic communications device may take the form of a magnetic encoder or a magnetic emulator. A magnetic encoder may change the information located on a magnetic medium such that a magnetic stripe reader may read changed magnetic information from the magnetic medium. A magnetic emulator may generate electromagnetic fields that directly communicate data to a magnetic stripe reader. Such a magnetic emulator may communicate data serially to a read-head of the magnetic stripe reader.

All, or substantially all, of the front as well as the back of a card may be a display (e.g., bi-stable, non bi-stable, LCD, LED, or electrochromic display). Electrodes of a display may be coupled to one or more capacitive touch sensors such that a display may be provided as a touch-screen display. Any type of touch-screen display may be utilized. Such touch-screen displays may be operable of determining multiple points of touch. Accordingly, a barcode may be displayed across all, or substantially all, of a surface of a card. In doing so, computer vision equipment such as barcode readers may be less susceptible to errors in reading a displayed barcode.

A card may include a number of output devices to output dynamic information. For example, a card may include one or more RFIDs or IC chips to communicate to one or more RFID readers or IC chip readers, respectively. A card may include devices to receive information. For example, an RFID and IC chip may both receive information and communicate information to an RFID and IC chip reader, respectively. A device for receiving wireless information signals may be provided. A light sensing device or sound sensing device may be utilized to receive information wirelessly. A card may include a central processor that communicates data through one or more output devices simultaneously (e.g., an RFID, IC chip, and a dynamic magnetic stripe communications device). The central processor may receive information from one or more input devices simultaneously (e.g., an RFID, IC chip, dynamic magnetic stripe devices, light sensing device, and a sound sensing device). A processor may be coupled to surface contacts such that the processor may perform the processing capabilities of, for example, an EMV chip. The processor may be laminated over and not exposed such that such a processor is not exposed on the surface of the card.

A card may be provided with a button in which the activation of the button causes a code to be communicated through a dynamic magnetic stripe communications device (e.g., the subsequent time a read-head detector on the card detects a read-head). The code may be indicative of, for example, a feature (e.g., a payment feature). The code may be received by the card via manual input (e.g., onto buttons of the card) or via a wireless transmission (e.g., via light, electromagnetic communications, sound, or other wireless signals). A code may be communicated from a webpage (e.g., via light and/or sound) to a card. A card may include a display such that a received code may be visually displayed to a user. In doing so, the user may be provided with a way to select, and use, the code via both an in-store setting (e.g., via a magnetic stripe reader) or an online setting (e.g., by reading the code from a display and entering the code into a text box on a checkout page of an online purchase transaction). A remote server, such as a payment authorization server, may receive the code and may process a payment differently based on the code received. For example, a code may be a security code to authorize a purchase transaction. A code may provide a payment feature such that a purchase may be made with points, debit, credit, installment payments, or deferred payments via a single payment account number (e.g., a credit card number) to identify a user and a payment feature code to select the type of payment a user desires to utilize.

A dynamic magnetic stripe communications device may include a magnetic emulator that comprises an inductor (e.g., a coil). Current may be provided through this coil to create an electromagnetic field operable to communicate with the read-head of a magnetic stripe reader. The drive circuit may fluctuate the amount of current travelling through the coil such that a track of magnetic stripe data may be communicated to a read-head of a magnetic stripe reader. A switch (e.g., a transistor) may be provided to enable or disable the flow of current according to, for example, a frequency/double-frequency (F2F) encoding algorithm. In doing so, bits of data may be communicated.

A card may include a touch transmitter that may activate a capacitive touch sensor on another device such that the other device believes a user physically touched the capacitive touch sensor with his/her finger. Accordingly, a touch transmitter may activate a capacitive touch screen, such as a capacitive touch screen located on a mobile telephonic device, tablet computing device, or a capacitive touch screen of a laptop or stationary computer. The touch transmitter may, accordingly, communicate information to a device (e.g., to a mobile telephonic device) by activating and deactivating a touch sensor (or sensors) on a capacitive touch screen in a particular manner. For example, a touch transmitter may communicate information serially by activating and deactivating a capacitive touch screen sensor with respect to time. A touch transmitter may, accordingly, communicate information via a capacitive touch sensor using F2F encoding, where a state transition occurs either at an activation or, for example, at an activation as well as a deactivation. In this manner, a card may communicate information directly to a mobile telephonic device with a capacitive touch screen, or any device with a capacitive touch screen, without requiring any physical connections or the use of proprietary communication protocols. A software program may run on the device having the touch screen that is operable to determine information provided by one or more touch transmitters from a device such as a battery-powered payment card. The software program may, for example, determine different bits of information by measuring the time between state transitions. For example, a particular time period between state transitions may be determined as one bit of information (e.g., a "0" or "1," respectively). A another particular time period between state transitions may be determined as a different bit of information (e.g., a "1" or a "0," respectively). A message provided from a touch transmitter may initially include a string of a particular length of a particular bit (e.g., four or five bits) such that the software program may lock onto, track, and determine the time duration of that particular bit such that future received bits may be properly determined. One particular time period associated with one bit of information may be approximately twice as long in duration as another particular time period associated with a different bit of information.

A card, or other device, may utilize one or more touch transmitters to communicate any type of information. For example, a card may utilize a touch transmitter to communicate a payment card number, and associated data (e.g., associated discretionary data such as payment codes and expiration date), such that a payment purchase may be completed. For example, a card may utilize a touch transmitter to communicate track 1, track 2, and/or track 3 magnetic stripe information to a device. A software program may be provided on the device receiving the magnetic stripe information that completes a purchase transaction based on the magnetic stripe data received from the touch screen. As per another example, a card may communicate information indicative of one or more user selections on the card such that user selections may be communicated to a capacitive touch screen (e.g., in addition to payment data and/or other data). As per yet another example, messages may be communicated to a device having a capacitive touch screen to provide the device with status on a communication. For example, a card may communicate a message to a device, via its capacitive touch screen, that a message is about to be sent or a message has completed transfer. The card may also communicate identification and password information such that the card may securely identify itself to a device.

The card may receive information from a device having a capacitive touch screen such that bi-directional communications may occur with the device utilizing the capacitive touch screen. For example, a card may receive information via light pulses emitted from the capacitive touch display. More particularly, for example, a software program may be installed in a device (e.g., a mobile telephone) operable to emit messages, via light, to a card and receive messages, via touch, from the card. The bi-directional communication may happen in parallel (e.g., light pulses may be sent to the card simultaneously with touch pulses being received from the card). The bi-directional communications may happen sequentially (e.g., the card may communicate via touch and then, after the card communicates, the card may receive communication from the device via light and, after the device communicates, the card may communicate via touch). The device may communicate identification and password information via light pulses to a battery-powered card (or other device) such that the battery-powered device may securely identify the communicating device. In this manner, the devices may initiate a handshake in order to identify each other and initiate a secure communications channel between the two devices. At least one of the devices may communicate with a remote server (e.g., via a telephonic communications channel) to receive information about the device communicating with it such that received identification and password information may be identified by the remote server. The identification and password information for multiple devices may be, for example, stored locally on any one of the devices.

Bi-directional communication may, for example, allow for handshaking to occur between the two devices such that each device may be identified and setup a secure communication channel via light pulses and touch pulses. Additionally, for example, information indicative of receipt of message may be communicated via light and/or touch. Information may be communicated in other ways such as, for example, via sound or electromagnetic pulses. Synchronization signals may be communicated before and after a message. For example, a string of particular bits (e.g., "0"s) may appear before every message in order for a card, or other device, to lock onto the timing of the information being transmitted in the signal. For example, a zero may be transmitted via a "short" touch pulse and a one may be transmitted via a "long" touch pulse. In synchronizing the signal, the receiving device may train itself onto the duration of a "short" touch pulse versus a "long" touch pulse. A "short" touch pulse may be the time between activations of a capacitive sensor or the time between the activation and deactivation of a touch sensor.

A card may include one or more light sensors, touch transmitters, capacitive touch sensors, and/or light emitters. Accordingly, two instances of such a card may communicate bi-directionally via light as well as via capacitive touch.

A webpage, or other graphical user interface, may be displayed on a device (e.g., a mobile telephonic phone) and may interact with a card, both via communicating light information and receiving touch information, and this information may be communicated to a remote server. Such a remote server may be, for example, an authentication server utilized to complete a purchase or other transaction. In this manner, a user does not need, for example, to load his/her payment information into a website. Instead, for example, a user may gather a variety of items for purchase and may select to pay with a touch-communicating card. At this moment, the user may hold the card to the display of a device (e.g., a mobile telephonic phone or portable computer) and the payment information may be securely communicated, via the webserver, to a remote server for payment authorization.

A touch transmitter on a card may be, for example, mechanical or electronic in nature. For example, a mechanical switch may physically connect a conductive material having a particular capacitance to another conductive material having a different particular capacitance. In doing so, for example, the mechanical switch may determine whether a conductive area has a capacitance approximately that of a finger in order to communicate information to a capacitive touch screen. As per another example, a circuit may be provided that electrically provides a particular capacitance on a plate (e.g., a particular electrostatic field having a particular capacitance). In doing so, a microprocessor may electronically trigger one or more capacitive touch sensors on a capacitive touch screen of a device (e.g., a mobile telephonic device).

A card may include a touch transmitter that may activate a capacitive touch sensor on another device such that the other device believes a user physically touched the capacitive touch sensor with his/her finger. Accordingly, a touch transmitter may activate a capacitive touch screen, such as a capacitive touch screen found on a mobile telephonic device, tablet computing device, or a capacitive touch screen of a laptop or stationary computer. The touch transmitter may, accordingly, communicate information to a device (e.g., to a mobile telephonic device) by activating and deactivating a touch sensor (or sensors) on a capacitive touch screen in a particular manner. For example, a touch transmitter may communicate information serially by activating and deactivating a capacitive touch screen sensor with respect to time. A touch transmitter may, accordingly, communicate information via a capacitive touch sensor using F2F encoding, where a state transition occurs either at an activation or, for example, at an activation as well as a deactivation. In this manner, a card may communicate information directly to a mobile telephonic device with a capacitive touch screen, or any device with a capacitive touch screen, without requiring any physical connections or the use of proprietary communication protocols.

A card, or other device, may have one or more light sensors. Such a light sensor may include, for example, one or more photoresistors, photodiodes, phototransistors, light emitting diodes sensitive to light, or any other device operable to discern light or convert light into electrical energy. Such light sensors may receive information via light. For example, one or more light sensors may receive light pulses and may discern such light pulses into information based on one or more information encoding schemes stored on memory of a device that includes the one or more light sensors.

Multiple light sensors may be provided. One or more light sensors may receive information from one region on a display that generates, for example, different pulses or patterns of light over time. Each light sensor may, for example, receive information from a different light region on a display. A light region may communicate light, for example, by transmitting different colors of light (e.g., red, blue, green) or communicating information by changing back and forth between two colors of light (e.g., black and white). Information may be communicated, for example, based on the transition between colors of light based on time. For example, a transition from one color to a different color may be determined as a transition by a device (e.g., a battery-powered payment card). A transition may be a change from a particular color (e.g., black) to another color (e.g., white). Alternatively, a transition may be a change from any color (e.g., black or white) to a different color (e.g., white or black, respectively). The duration of time between such transitions may be utilized to determine a particular bit of information. For example, a "short" period of time between transitions may be one bit (e.g., "0" or "1") while a "long" period of time between transitions may be a different bit (e.g., "1" or "0"). In doing so, for example, the same information may be communicated across displays having different frame rates using the same encoding scheme. A series of training pulses may be sent before and/or after a data message such that a processor receiving information from one or more light pulses may discern the difference between a "short" and a "long" period. For example, a number of bits (e.g., three, four, or five "0s" or "1s") may precede any data message and may be known as information the processor receives before a message. Such known bits may be, for example, a "short" period such that a processor may determine the approximate duration of a "short" period and utilize this to determine a "short" or "long" period between future transitions. Alternatively, for example, a processor may discern transition and timing information across a data message and determine, based on the received data, the transition periods that are "long" relative to the other periods. In doing so, the processor may discern data from the received transition information. A "long" transition period may be, for example, approximately twice as long as a "short" transition period. A "long" transition period may be, for example, at least 25 percent longer as a "short" transition period. More than two lengths of transition intervals may be utilized. For example, "short," "medium," "long," and "very long" transition intervals may be utilized to convey four states of information to a device.

Multiple regions of a display may be utilized to communicate information to a device (e.g., via a mobile telephonic device, portable computing device, or other device) via light. Each region may communicate different tracks of information. Tracks of information may also be communicated based on the state of each light region at a particular time. For example, if one region is a particular color during a particular period of time and another region is a different color during that same period of time then the particular combination of these states during a particular period may correlate to data information.

Multiple light sensors may allow for data to be communicated in parallel via multiple independent communication tracks (e.g., via multiple regions of a display providing light information to a device). For example, four light sensors may independently receive four data messages in parallel. Alternatively, for example, multiple light sensors may be utilized to receive a single message. Accordingly, multiple light sensors may be utilized to receive a single message faster than a single light sensor. For example, information may be communicated in more than two states

(e.g., more than binary). For example, a first light sensor receiving white while a second light sensor receives black may be a "0." The first light sensor receiving white while the second light sensor receives white may be a "1." The first light sensor receiving black while the second light sensor receives white may be "2." The first light sensor receiving black while the second light sensor receives black may be "3."

Multiple light sensors may be utilized in a sensor array to determine the same data from a single light region. Multiple samples may be taken from each sensor. Multiple samples from each sensor may be averaged together. The averaged samples from each sensor of a sample array may be utilized to determine information. For example, a majority or a supermajority of the sensors in an array may have to provide an average sample over a period of time indicative of a transition as occurring for a transition for a processor to determine that a transition has occurred. A sampling rate for a light sensor may be, for example, greater than 10 samples per second. For example, a processor may take a sample from a light sensor more than 20 times per second (e.g., more than 50 times per second).

A single light sensor may receive information serially in a variety of ways. For example, light may be communicated by providing different pulse widths of a particular color (e.g., white versus black). A standard black width may be utilized for synchronization. A white pulse the same width as the black may be a "0." A white pulse double the width of a black pulse may be "1." A white pulse triple the width of a black pulse may be "2." Accordingly, for example, such a scheme may allow information to be communicated by a display regardless of the frame rate. By comparing one duration of one type of light to another duration of another type of light, information may be communicated regardless of the frame rate.

A single light sensor may receive information serially, for example, via frequency double-frequency encoding. Particularly, for example, a processor may receive electrical signals from a light sensor indicative of the light sensed by a light sensor. Information may be pulsed to the processor, via the light sensor, by switching between black and white.
The timing of transitions from white to black and black to white may be utilized to communicate information. A number of synchronization pulses may be communicated before a message such that the processor may lock onto the periodicity of a particular bit (e.g., "0" or "1"). A short duration between transitions may be a first bit of data (e.g., "0") while a long duration between transitions may be a second bit of data (e.g.," 1"). Such a scheme may be independent of a frame rate of a display. Accordingly, for example, the information may be communicated via a display of a television set, a computer monitor, and a mobile cell phone - regardless if the frame rates are different for each device.

The card may receive information from a device having a capacitive touch screen such that bi-directional communications may occur with the device utilizing the capacitive touch screen. For example, a card may receive information via light pulses emitted from the capacitive touch display. More particularly, for example, a software program may be installed in a device (e.g., a mobile telephone or a tablet computing device) operable to emit messages, via light, to a card and receive messages, via touch, from the card. The bi-directional communication may happen in parallel (e.g., light pulses may be sent to the card simultaneously with touch pulses being received from the card). The bi-directional communications may happen sequentially (e.g., the card may communicate via touch and then, after the card communicates, the card may receive communication from the device via light and, after the device communicates, the card may communicate via touch).

Bi-directional communication may, for example, allow for handshaking to occur between the two devices such that each device may be identified and a secure communication channel may be setup via light pulses and touch pulses. Such a secure communication channel may have one or more (e.g., three) tracks of information. Additionally, for example, information indicative of a receipt of a message may be communicated via light and/or touch. Synchronization signals may be communicated before and after a message. For example, a string of particular bits (e.g., "0"s) may appear before every message in order for a card, or other device, to lock onto the timing of the information being transmitted in the signal. For example, a zero may be transmitted via a "short" touch pulse and a one may be transmitted via a "long" touch pulse. In synchronizing the signal, the receiving device may train itself onto the duration of a "short" touch pulse versus a "long" touch pulse. A "short" touch pulse may be the time between activations of a capacitive sensor or the time between the activation and deactivation of a touch sensor.

A card, or other device (e.g., a mobile telephonic device) may include one or more light sensors, touch transmitters, capacitive touch sensors, and light emitters. Accordingly, two instances of such a card may communicate bi-directionally via light as well as capacitive touch.

### Brief Description of the Drawings

The principles and advantages of the present invention can be more clearly understood from the following detailed description considered in conjunction with the following drawings, in which the same reference numerals denote the same structural elements throughout, and in which:
FIG. 1 is an illustration of cards constructed in accordance with the principles of the present invention;
FIG. 2 is an illustration of a graphical user interface constructed in accordance with the principles of the present invention;
FIG. 3 is an illustration of a card constructed in accordance with the principles of the present invention;
FIG. 4 is a schematic of a system constructed in accordance with the principles of the present invention;
FIG. 5 is a schematic of a card constructed in accordance with the principles of the present invention;
FIG. 6 is an illustration of a graphical user interface constructed in accordance with the principles of the present invention;
FIG. 7 is an illustration of a system constructed in accordance with the principles of the present invention;
FIG. 8 is an illustration of a system constructed in accordance with the principles of the present invention;
FIG. 9 is an illustration of a device constructed in accordance with the principles of the present invention;
FIG. 10 is an illustration of a device constructed in accordance with the principles of the present invention;
FIG. 11 is an illustration of a device constructed in accordance with the principles of the present invention;
FIG. 12 is an illustration of flow charts constructed in accordance with the principles of the present invention;
FIG. 13 is an illustration of flow charts constructed in accordance with the principles of the present invention;
FIG. 14 is an illustration of a card constructed in accordance with the principles of the present invention;
FIG. 15 is an illustration of a card constructed in accordance with the principles of the present invention;
FIG. 16 is an illustration of a network topology constructed in accordance with the principles of the present invention;
FIG. 17 is an illustration of a device constructed in accordance with the principles of the present invention;
FIG. 18 is an illustration of cards constructed in accordance with the principles of the present invention;
FIG. 19 is an illustration of a graphical user interface constructed in accordance with the principles of the present invention;
FIG. 20 is an illustration of a card constructed in accordance with the principles of the present invention;
FIG. 21 is a schematic of a system constructed in accordance with the principles of the present invention;
FIG. 22 is a schematic of a system constructed in accordance with the principles of the present invention;
FIG. 23 is an illustration of signals constructed in accordance with the principles of the present invention;
FIG. 24 is an illustration of signals constructed in accordance with the principles of the present invention;
FIG. 25 is an illustration of a scheme constructed in accordance with the principles of the present invention;
FIG. 26 is an illustration of a system constructed in accordance with the principles of the present invention; and
FIG. 27 is an illustration of a system constructed in accordance with the principles of the present invention.

### Detailed Description of the Invention

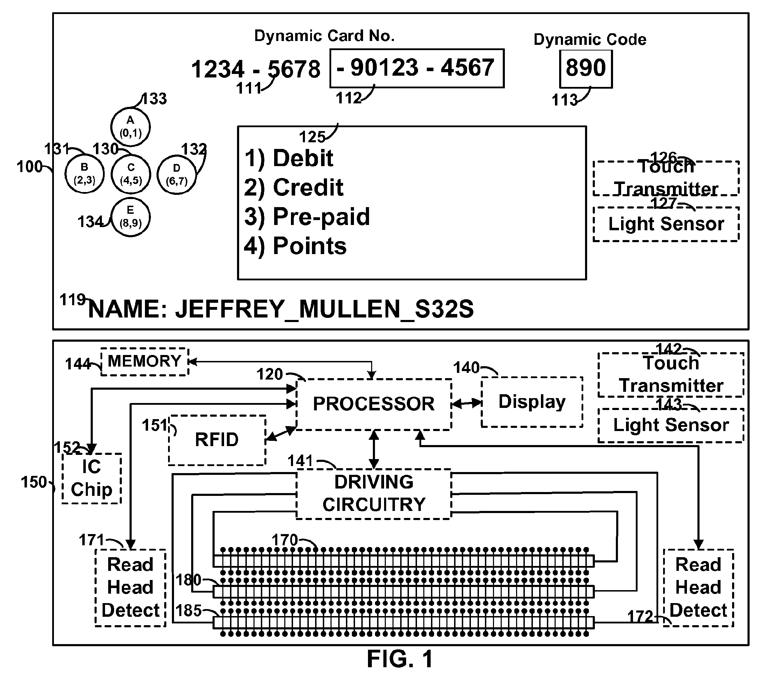

FIG. 1 shows card 100 that may include, for example, a dynamic number that may be entirely, or partially, displayed via display 112. A dynamic number may include a permanent portion such as, for example, permanent portion 111. Permanent portion 111 may be printed as well as embossed or laser etched on card 100. Multiple displays may be provided on a card. For example, display 113 may be utilized to display a dynamic code such as a dynamic security code. Display 125 may also be provided to display logos, barcodes, as well as multiple lines of information. A display may be a bi-stable display or non bi-stable display. Permanent information 119 may also be included and may include information such as information specific to a user (e.g., a user's name or username) or information specific to a card (e.g., a card issue date and/or a card expiration date). Card 100 may include one or more buttons such as buttons 130-134. Such buttons may be mechanical buttons, capacitive buttons, or a combination or mechanical and capacitive buttons. A button (e.g., button 130) may be used, for example, to communicate information through a dynamic magnetic stripe communications device indicative of a user's desire to communicate a single track of magnetic stripe information. Persons skilled in the art will appreciate that pressing a button (e.g., button 130) may cause information to be communicated through a dynamic magnetic stripe communications device when an associated read-head detector detects the presence of a read-head of a magnetic stripe reader. Button 130 may be utilized to communicate (e.g., after button 130 is pressed and after a read-head detects a read-head of a reader) information indicative of a user selection (e.g., to communicate two tracks of magnetic stripe data). Multiple buttons may be provided on a card and each button may be associated with a different user selection. Card 100 may include, for example, touch transmitter 126 and light sensor 127.

Architecture 150 may be utilized with any card. Architecture 150 may include processor 120. Processor 120 may have on-board memory for storing information (e.g., drive code). Any number of components may communicate to processor 120 and/or receive communications from processor 120. For example, one or more displays (e.g., display 140) may be coupled to processor 120. Persons skilled in the art will appreciate that components may be placed between particular components and processor 120. For example, a display driver circuit may be coupled between display 140 and processor 120. Memory 144 may be coupled to processor 120. Memory 144 may include data that is unique to a particular card. For example, memory 144 may store discretionary data codes associated with buttons of a card (e.g., card 100 of FIG. 1). Such codes may be recognized by remote servers to effect particular actions. For example, a code may be stored in memory 144 that causes a promotion to be implemented by a remote server (e.g., a remote server coupled to a card issuer's website). Memory 144 may store types of promotions that a user may have downloaded to the device and selected on the device for use. Each promotion may be associated with a button. Or, for example, a user may scroll through a list of promotions on a display on the front of the card (e.g., using buttons to scroll through the list). A user may select the type of payment on card 100 via manual input interfaces corresponding to displayed options on display 125. Selected information may be communicated to a magnetic stripe reader via a dynamic magnetic stripe communications device. Selected information may also be communicated to a device (e.g., a mobile telephonic device) having a capacitive sensor or other type of touch sensitive sensor.

Card 100 may include, for example, any number of touch transmitters 126 or light sensors 127. Touch transmitters 126 may be utilized, for example, to activate and deactivate a touch sensor on a capacitive, or other, touch screen. In doing so, a device having a touch screen may believe that a user is physically providing physical instructions to the device when a card is actually providing physical instructions to the device. Light sensors 127 may be utilized such that a display screen, or other light emitting device, may communicate information to light sensors 127 via light.

Any number of reader communication devices may be included in architecture 150. For example, IC chip 152 may be included to communicate information to an IC chip reader. IC chip 152 may be, for example, an EMV chip. As per another example, RFID 151 may be included to communicate information to an RFID reader. A magnetic stripe communications device may also be included to communicate information to a magnetic stripe reader. Such a magnetic stripe communications device may provide electromagnetic signals to a magnetic stripe reader. Different electromagnetic signals may be communicated to a magnetic stripe reader to provide different tracks of data. For example, electromagnetic field generators 170, 180, and 185 may be included to communicate separate tracks of information to a magnetic stripe reader. Such electromagnetic field generators may include a coil wrapped around one or more materials (e.g., a soft-magnetic material and a non-magnetic material). Each electromagnetic field generator may communicate information serially to a receiver of a magnetic stripe reader for a particular magnetic stripe track. Read-head detectors 171 and 172 may be utilized to sense the presence of a magnetic stripe reader (e.g., a read-head housing of a magnetic stripe reader). This sensed information may be communicated to processor 120 to cause processor 120 to communicate information serially from electromagnetic generators 170, 180, and 185 to magnetic stripe track receivers in a read-head housing of a magnetic stripe reader. Accordingly, a magnetic stripe communications device may change the information communicated to a magnetic stripe reader at any time. Processor 120 may, for example, communicate user-specific and card-specific information through RFID 151, IC chip 152, and electromagnetic generators 170, 180, and 185 to card readers coupled to remote information processing servers (e.g., purchase authorization servers). Driving circuitry 141 may be utilized by processor 120, for example, to control electromagnetic generators 170, 180, and 185.

Architecture 150 may also include, for example, touch transmitter 142 as well as light sensor 143. Architecture 150 may communicate information from touch transmitter 142 as well as receive information from light sensor 143. Processor 120 may communicate information through touch transmitter 142 and determine information received by light sensor 143. Processor 120 may store information on memory 144 to later be, for example, communicated via touch transmitter 142.

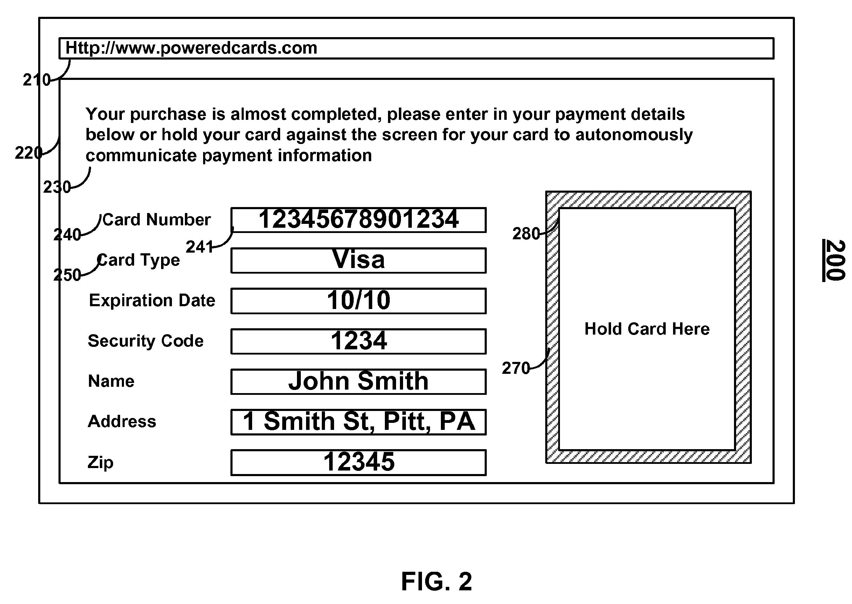

FIG. 2 shows graphical user interface (GUI) 200 that may be displayed, for example, from a stationary or portable computer, a mobile telephonic phone, a tablet computer, a navigational system, a watch, a card, or any device having a display screen. Graphical user interface 200 may be hosted, for example, from a server and may communicate with a number of additional servers. For example, graphical user interface 200 may be provided on a web browser, or other application run from a device, to complete a purchase transaction. GUI 200 may include, for example, input text boxes for a user to enter a card number, card type, expiration date, security code, name, address, and zip code. A submit button (not shown) may be included, for example, to communicate this information to a remote server for authorization. Additional text boxes may be included, for example, such as a text box for additional discretionary payment data or a shipping address.

GUI 200 may also have communication area 280 surrounded by status area 270. Communication area 280 may be utilized, for example, to communicate data to/from a card or other device via light output and tactile input. Status area 270 may be utilized to communicate to a user of the status of the communication.

Accordingly, for example, GUI 200 may receive payment information from a card via a touch sensor located on a display providing GUI 200. GUI 200 may communicate information to a card via light (e.g., light pulses). Accordingly, for example, a secure communication may occur between a card and GUI 200. The information may be displayed in the text boxes (e.g., the text boxes may be auto filled either completely or partially). Alternatively, for example, no information may be shown. Status area 270 may, for example, provide a particular color of light (e.g., yellow) to indicate to the user that the process is underway. A different color of light may be displayed before the process begins (e.g., red). Yet a different color of light may be displayed after the process is completed (e.g., green).

The information may be communicated in encrypted form to GUI 200. GUI 200 may then, for example, decrypt the information or forward the encrypted message to a remote server for processing. In doing so, for example, GUI 200 may not be exposed to any unprotected sensitive information. Information communicated from the card to the GUI may include, for example, card number, card type, expiration date, security code, zip code, address, email address, shipping address, additional discretionary data, discretionary data indicative of user-selected payment codes, or any other type of information. A card may also, communicate, for example encryption keys as well as other data for device handshaking and secure communication protocols. A card may, for example, communicate an email address and a password via a touch transmitter generated by the card. In doing so, for example, a payment may be authorized based on an email address and a password. An amount may also be entered into a card, or other device, by a user and communicated to GUI 200 via touch-based communications from the card.

One or more light sensors or touch transmitters may be located on a card. For example, a touch transmitter may be located at opposite ends of a card. A user may touch a button (e.g., a download button) to start communicating data via the touch transmitter. The GUI may be able to determine whether, for example, one or more touch transmitters are located within communication area 280. If the card is not aligned, the user may be notified (e.g., by status area 270 performing a particular action, such as blinking or displaying particular text or color) until the card is properly aligned within communication area 280. Communication area 280 may communicate information, via light, back to the card, or other device, that the card is being realigned such that the card does not require a user to repress a particular button (e.g., a "download" button). In doing so, GUI 200 may communicate the status of the communication back to a card, or other device, held against communication area 280 via light.

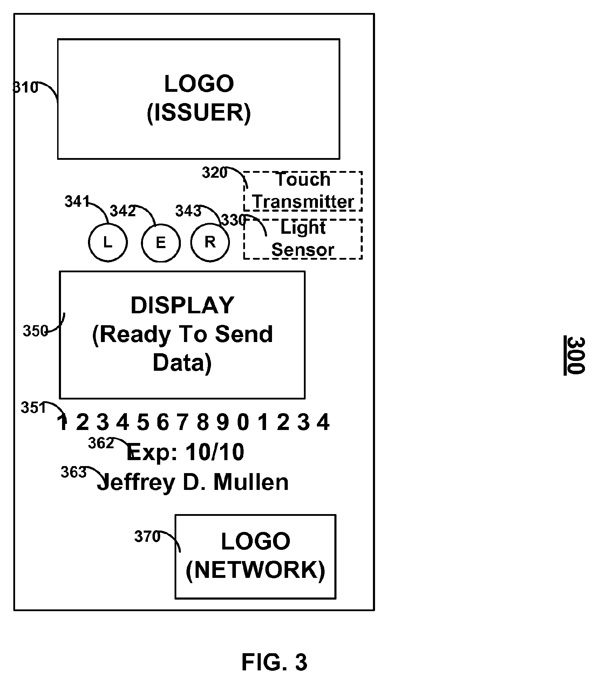

FIG. 3 shows card 300, which may be provided in a vertical configuration. Card 300 may include, for example, issuer logo 310, network logo 370, display 350, manual input interfaces 341-343, touch transmitter 320, light sensor 330, permanent indicia 351, 362, and 363. Persons skilled in the art will appreciate that any permanent indicia may be provided via display 350. For example, one or more payment card numbers, user name, expiration date, and security codes may be provided via display 350. Persons skilled in the art will appreciate that touch transmitter 320 and/or light sensor 330 may be placed in the proximity of a corner of a card. By placing touch transmitter 320 in the proximity of a corner of a card, the corner of the card may be placed over a portion of a capacitive touch screen and communicate data without the need for the entire card to be placed over the capacitive touch screen. Display 350 may, for example, be utilized to display a payment card number such as a fifteen or sixteen digit credit or debit card number. Manual input interface 341 may, for example, allow a user to scroll in a particular direction (e.g., the left direction or the up direction) of a list of options. Manual input interface 343 may, for example, allow a user to scroll in a different direction (e.g., the right direction or the down direction) or a list of options. Manual input interface 342 may, for example, allow a user to select an option from a list of options.

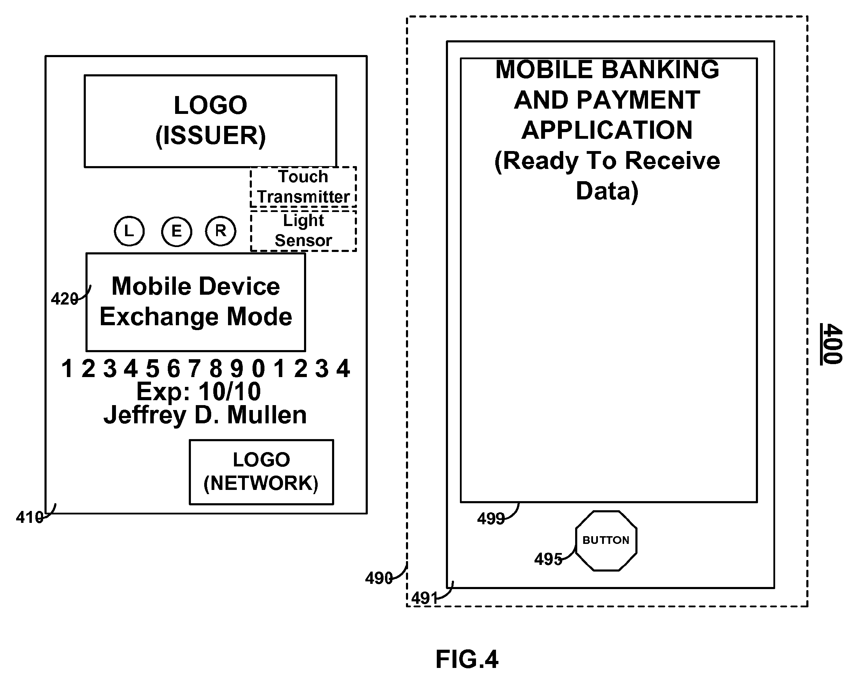

FIG. 4 shows system 400 that may include mobile telephonic device 490 and device 410 (e.g., a payment card). Device 410 may include, for example, display 420 that may display status indicative of a communication. A touch transmitter and/or light sensor may be provided on a surface of device 410 opposite display 420. In this manner, for example, device 410 may communicate with mobile telephonic device 490 as device 410 is held against device 490, but device 410 may communicate information indicative of the status of a communication via display 420.

Device 490 may include housing 491, button 495, and capacitive touch display screen 499. Device 410 may utilize a touch transmitter to, for example, communicate information to mobile telephonic device 490. Persons skilled in the art will appreciate that a mobile banking application may be utilized on mobile telephonic device 490. Device 410 may be utilized to properly identify a person securely in order to reduce fraud. Accordingly, device 410 may communicate identification information and security codes, such as time based or used based codes, to device 490 via display 499. Accordingly, such an identification may be required, for example, by a banking application in order to gain access to banking information, execute a financial trade (e.g., a stock or option trade), transfer money, or pay a bill via an electronic check.

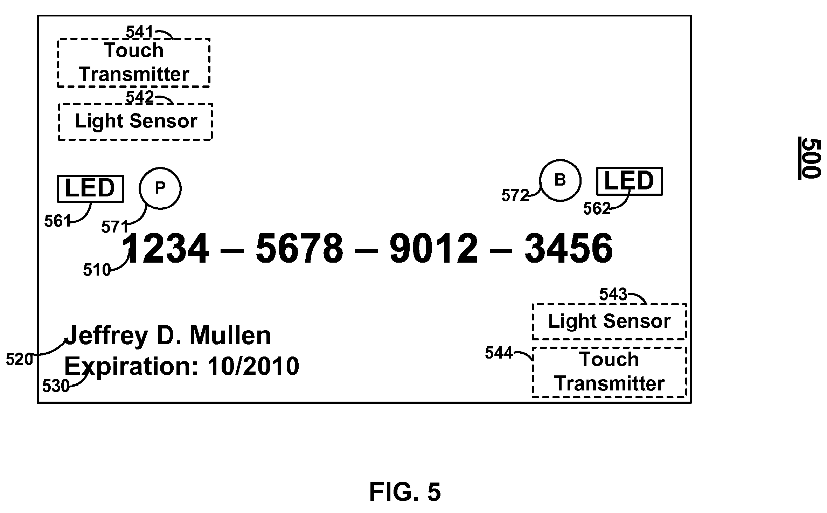

FIG. 5 shows device 500 that may include, for example, touch transmitter 541, light sensor 542, light emitting diodes 561 and 562, buttons 571 and 572, permanent information 520 and 530, as well as light sensor 543 and touch transmitter 544.

Persons skilled in the art will appreciate that multiple touch transmitters may communicate data simultaneously in parallel to a touch screen. Similarly, for example, multiple light sensors may receive data simultaneously in parallel from a display screen. The information may be, for example, different or the same. By communicating the same information through different touch transmitters, a device may receive two messages and confirm receipt of a communication if the two messages are the same. Touch transmitters may be utilized, for example, by software on a device to determine the positioning of device 500 on an associated touch screen. Similarly, light sensors may be utilized, for example, to receive information indicative of the positioning of device 500 on an associated touch screen. The electronics of a card (e.g., a touch transmitter) may be provided on a single or multiple layer flexible printed circuit board and laminated via a hot-lamination or cold-lamination process. An injection process may be utilized where one or more liquids may be provided about an electronics package and hardened (e.g., via a light, temperature, pressure, and/or chemical process) to form a card. A card may be, for example, between approximately 30 and 33 thousandths of an inch thick.

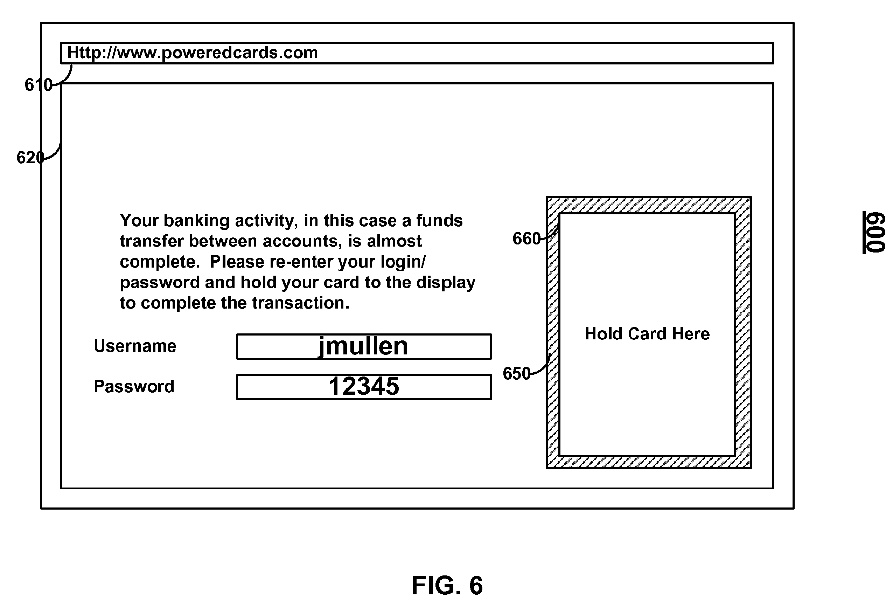

FIG. 6 shows GUI 600 that may include navigation bar 610 and main screen 620. GUI 600 may be, for example, a web browser for a mobile banking application. A user may be required to, for example, enter a username, password, and authenticate by holding a banking card to a display over area 660 such that the banking card may communicate an authentication message. In doing so, status area 650 may change to display indicia indicative of an authenticated identity. The card may also receive information, via light or other method (e.g., sound) as part of the authentication process. Upon authentication, the user may be provided access to the mobile banking application or a particular transaction may occur (e.g., a funds transfer may be initiated or a purchase transaction may be authorized). Such an authentication process may occur for any process, such as a process performed at least in part on an application or webpage of a device.

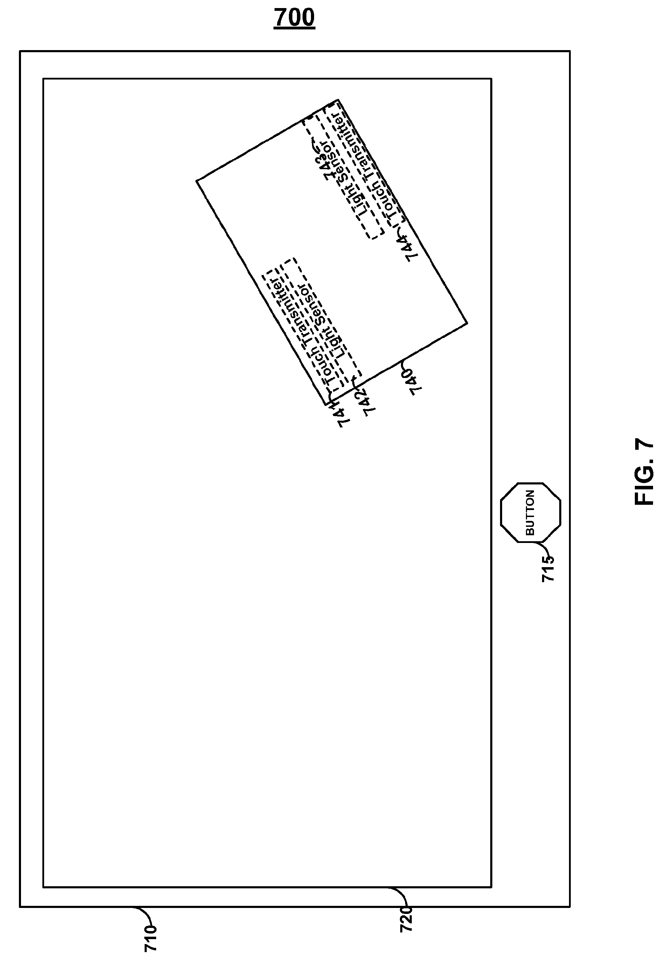

FIG. 7 shows device 700 that may include housing 710 and touch display screen 720. A user may hold a card anywhere on touch display screen 720 and a software program running on device 700 may detect the orientation and position of card 740 on touch display screen 720 via touch pulses communicated via touch transmitters 741 and 744. Light sensors 742 and 743 may be utilized such that device 700 may communicate information back to card 740 via light. Device 700 may communicate light in the proximity of light sensors 742 and/or 743 by determining the location and orientation of card 740 on device 700. In doing so, for example, light pulses may be generated by device 700, but may be hidden from the view of a user via card 740. One or more buttons 715 may be provided on device 700. Button 715 may, for example, be utilized to turn a display of device 700 OFF and/or toggle display of device 700 between ON and OFF.

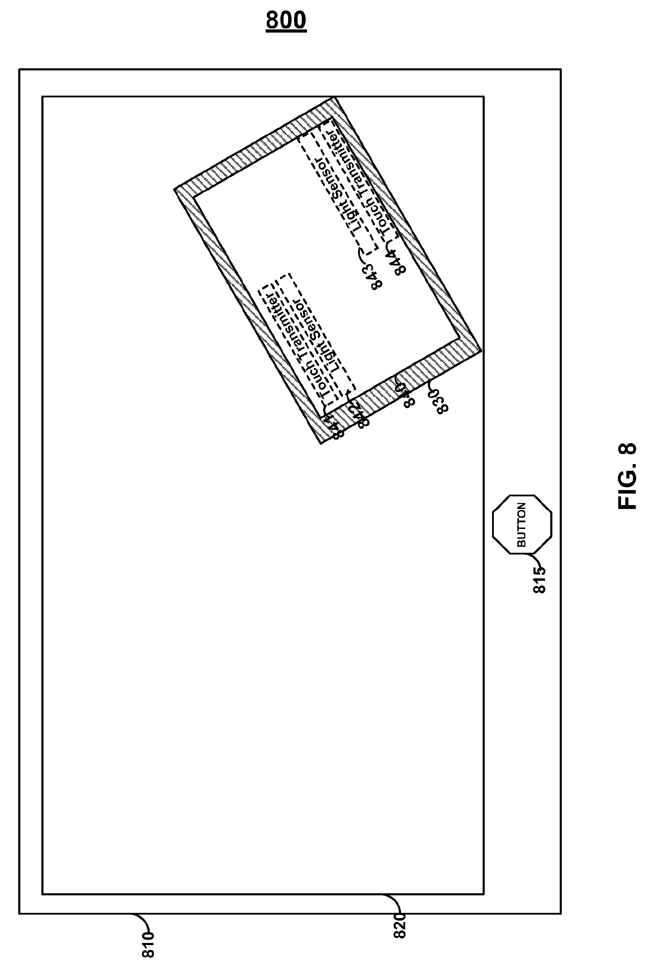

FIG. 8 shows system 800 having device 810 with button 815 and touch sensitive display 820 and card 840 having touch transmitters 841 and 844 and light sensors 842 and 843. Software on device 810 may detect touch pulses from card 840 and may confirm the presence of card 840 by creating status area 830 around card 840 in the proximity of card 840 and in the approximate configuration of card 840. Status area 830 may form a frame around a card and, as such, may be longer and wider than a card. Status area 830 may be, for example, a box in which a card may be placed and, as such, may be longer and wider than a card. Indicia may be provided in status area 830 such as, for example, text information describing a status of a process (e.g., "orientation confirmed," "authorizing transaction," "transaction authorized, please remove card."). Status area 830 may, for example, change colors as the status of a process changes. For example, status area 830 may be a first color while a transaction is being authorized and a second color after a transaction is authorized.

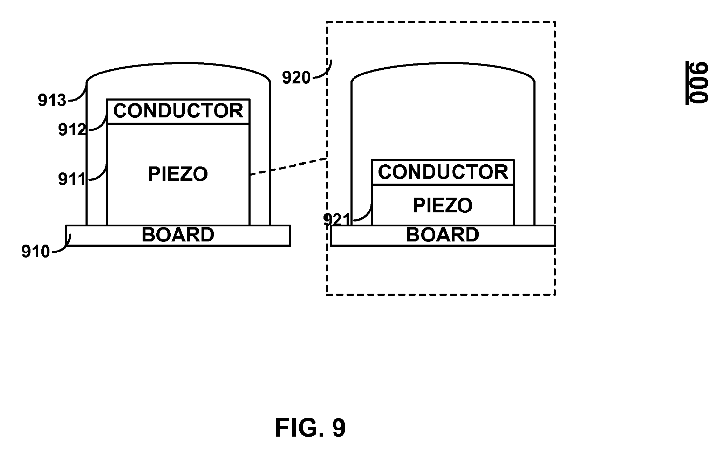

FIG. 9 shows touch transmitter 900 that may include piezoelectric actuator 911, conductive layer 912, and dome 913. Piezoelectric actuator 911 may be coupled to board 910, which may be a single or multiple layer flexible printed circuit board. A processor may control the actuation state of piezoelectric actuator 911 in order to move conductive layer 912 closer to, or further away, from the surface of a device. In doing so, the processor may physically touch and untouch a touch screen in order to provide input to that touch screen. For example, piezoelectric actuator 911 may be retracted to position 921 as shown in state 920. Persons skilled in the art will appreciate that conductor 912 may have a capacitance approximate to the capacitance of a finger and that dome 913 may not be included such that conductor 912 may physically touch a touch sensitive display.

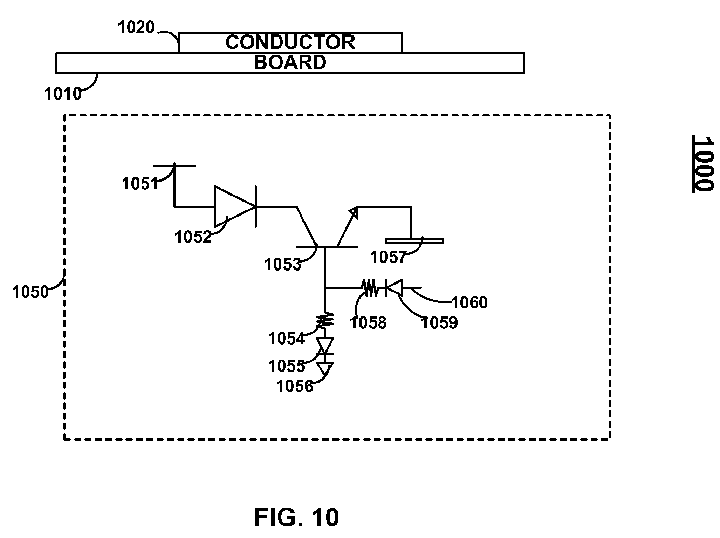

FIG. 10 shows touch transmitter 1000 that may include, for example, board 1010 and conductive layer 1020. Persons skilled in the art will appreciate that board 1010 may be a single or multiple layer printed circuit board with printing on a single or both surfaces of each layer. Board 1010 may be a flexible circuit board reinforced with additional material (e.g., Kevlar). Board 1010 may be, for example, a single or multiple layer flexible printed circuit board. Components may be fixed to board 1010 using, for example, a wire-bonding, flip-on-flex, or another assembly process. Conductor 1020 may be, for example, an area of copper provided on the surface of board 1010. Accordingly, conductor 1020 may be printed on the surface of board 1010 such that, for example, additional assembly efforts are not required and the cost of touch transmitter 1000 is decreased. A processor (not shown) may provide control signals to a mechanical switch (not shown) in order to physically connect additional conductive material, or other components, to conductor 1020. In doing so, the processor may physically change the amount of capacitance seen at conductor 1020 by a capacitive touch screen. Accordingly, a processor may send information signals to the capacitive touch screen by mechanically and/or electrically coupling and decoupling capacitance to conductor 1020 based on a particular encoding policy (e.g., F2F encoding).

Touch transmitter 1000 may include circuitry 1050 that may, for example, electrically change the capacitance of conductor 1020 on board 1010. Circuitry 1050 may include, for example, supply voltage 1051, diode 1052, transistor 1053, conductor 1057 (e.g., which may be conductor 1020), resistor 1054, resistor 1058, diode 1059, diode 1055, ground 1056, and input terminal 1060. A processor (not shown) may be coupled to terminal 1060. Accordingly, a processor may electrically control a touch transmitter such that the touch transmitter may electrically touch a capacitive touch screen without mechanically touching the capacitive touch screen.

A capacitive touch screen is provided and may be fabricated to include, for example, a set of conductors that interact with electric fields. A human finger may include a number of conductive electrolytes covered by a layer of skin (e.g., a lossy dielectric). A finger's capacitance may vary, for example, between approximately 50pF and 250pF. A finger's capacitance may be referred to as Cf while the capacitance of a set of one or more touch sensors without a finger present may be referred to as Cp or parasitic capacitance.

A rectangular, square, circular, oval, or any shaped plate may be provided. For example, plate 1057 may be provided. The plate may be fabricated from a conductive material such as, for example, copper. The area of the plate may be, for example, constructed to be smaller than the area of a touch sensor on a touch screen or a particular set of touch sensors on a touch screen. Plate 1057 may initially be provided with an initial capacitance of approximately zero or close to zero (e.g., 5pF or less). Transistor 1053 may be coupled to plate 1057. Transistor 1053 may be, for example, an NPN transistor. The capacitance of transistor 1053 from collector to emitter, C_{CE}, may be approximately 5pF or less. Initially, transistor 1053 may be OFF. Plate 1057 may be connected, for example, to the emitter of transistor 1053 and positioned to within the proximity of the touch sensor, or array of touch sensors, to be touched. The capacitance of plate 1057 may be, while transistor 1053 is OFF, low enough so plate 1057 does not activate any touch sensor. Persons skilled in the art will appreciate that a plate of a touch transmitter need not physically touch a touch sensor. Instead, for example, the plate of a touch transmitter may be located within the proximity of the touch sensor (e.g., separated from the touch sensor by a particular amount). For example, the plate may be approximately 5 to 30 thousandths of an inch from a touch sensor (e.g., approximately 12-16 thousandths of an inch). Transistor resistor 1058 and diode 1059 may be provided to, for example, isolate the capacitance of the rest of a card, or other device, circuitry from transistor 1053 while transistor 1053 is OFF. Additionally, transistor 1053 may be isolated from any other parasitic capacitance (e.g., supply voltages and ground terminals). Similarly, traces may be provided that are minimized in length in order to decrease parasitic capacitances around transistor 1053 and plate 1057.

A processor may apply a voltage across diode 1059 and resistor 1058 to turn transistor 1053 ON. Resistor 1058 may, for example, include a resistance of approximately 0.5k-1.5k (e.g., approximately 1k).

The base of transistor 1053 may also be grounded to ground 1056 via diode 1055 and resistor 1054. Resistor 1054 may, for example, include a resistance of approximately 7.5k-12.5K (e.g., approximately 10k).

The collector and base of transistor 1053 may be isolated, for example, by forward biased signal diodes. For example, diode 1052 may be provided between supply voltage 1051 and transistor 1053. Diodes may be utilized to block capacitance and may be either forward or reversed biased. In isolating capacitance from transistor 1053, the capacitance of plate 1057 may be more accurately controlled.

Persons skilled in the art will appreciate that diode 1059 may be provided to the left of resistor 1058. Persons skilled in the art will also appreciate that circuitry 1050 may be provided without resistor 1054 and diode 1055 if the source control has low impedance when inactive. Components may be added to, removed from, or modified within circuitry 1050. For example, the emitter of transistor 1053 may be grounded through a diode (or other circuit component) so that a current path may exist through transistor 1053 when transistor 1053 is ON.

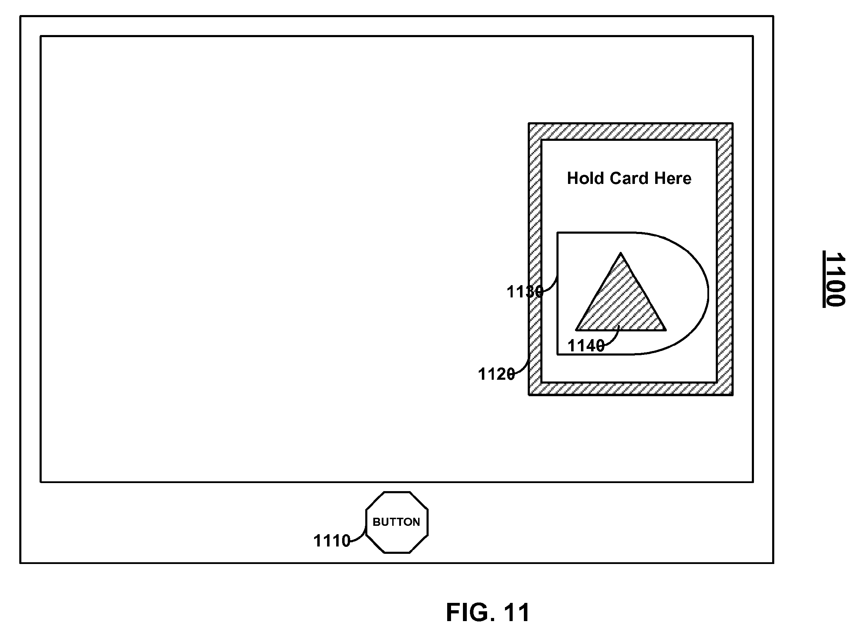

FIG. 11 shows device 1100 that may be a touch sensitive display screen with a GUI having status area 1120, logo 1130, and light communication area 1140. Light communication area 1140 may provide light signals to a card in order to communicate information to the card. In turn, the area inside status area 1120 may be utilized to receive touch signals from the card. Persons skilled in the art will appreciate that the same area (e.g., area 1140) may be utilized to communicate both light and touch signals or different areas may be utilized to communicate light and touch signals. For example, area 1140 may be utilized to communicate light signals while the rest of logo 1130 may be utilized to communicate touch signals. Button 1110 may be included on device 1100 and may be a mechanical button.

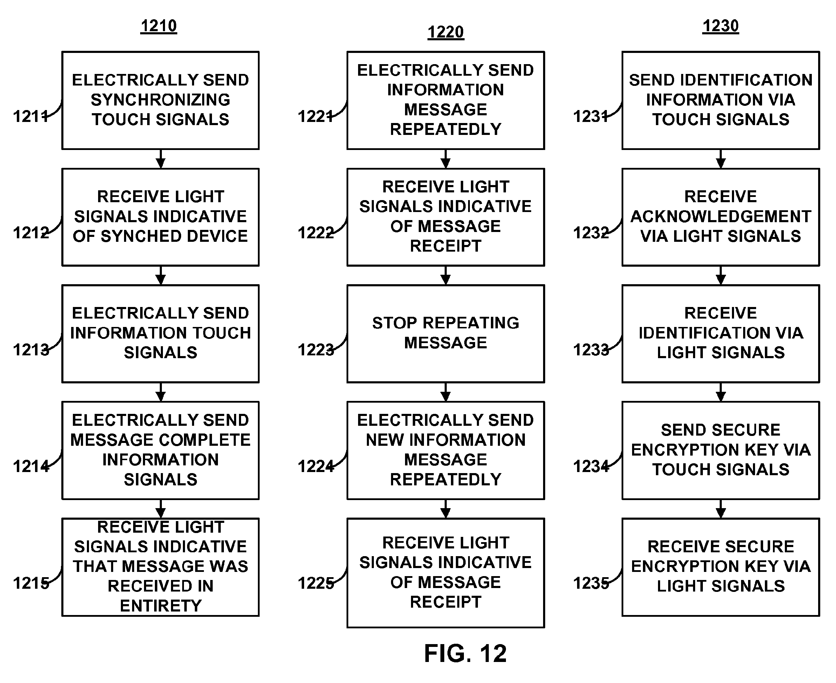

FIG. 12 shows process flow charts 1210, 1220, and 1230. Process 1210 may include step 1211, in which a card, or other device, may send synchronizing touch signals to another card, or other device. The synchronization signals may include, for example, a string of a particular bit of information such as a string of "1"s or a string of "0"s. The card may receive, in step 1212, light signals (or other signals such as touch signals) indicative of the device receiving the synchronization signals and processing the synchronization signals so that the device is synchronized to receive information signals. In step 1213, the card may send information touch signals. In step 1214, the card may send touch signals indicative of the completion of a message. In step 1215, the card may receive signals (e.g., light signals) indicative of a message being received in its entirety. If a device does not receive the message properly (e.g., the data was corrupted), the device may request, via a light or touch signal, that the message be resent. The device receiving the touch signals may then, for example, communicate information back to the card in a similar manner. In step 1212, the return light signals may be, for example, light synchronization signals such that the card may synchronize to the expected light pulses that are to be received.

Process 1220 may include, for example, step 1221, in which an information message is repeatedly sent (e.g., via touch signals, light signals, or sound signals) from one device (e.g., a card) to another device (e.g., a mobile telephonic device). Step 1222 may occur in which a message is received indicative of a successful receipt of the message provided in step 1221. Accordingly, the message of 1221 may stop being sent in step 1223 and a new message may be sent repeatedly in step 1224 until the message is acknowledged as being received in step 1225.

Process 1230 may be provided and may include step 1231, in which identification information is communicated. Step 1232 may include receiving acknowledgment of receipt of identification information. Step 1233 may include receiving identification information from the other device. Step 1234 and 1235 may be utilized, for example, to exchange information regarding how future data in the communication may be encrypted.

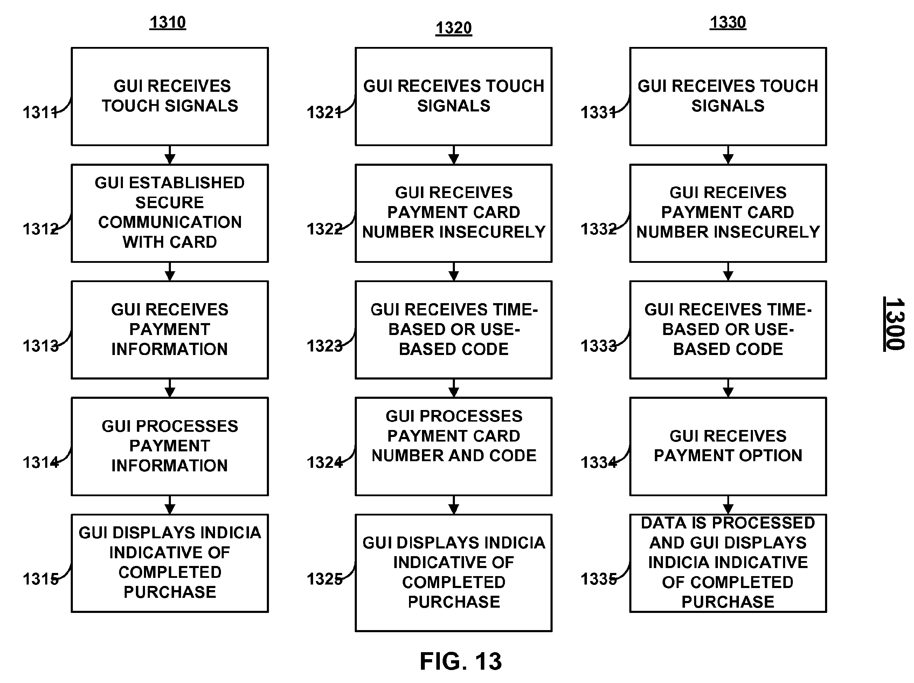

FIG. 13 shows process flow charts 1310, 1320, and 1330. Flow chart 1310 includes step 1311, in which a GUI (e.g., running on a mobile phone or a portable computer) receives touch signals from a device such as a card. The GUI may establish secure communications in step 1312 and may receive payment information in step 1313. The GUI may process the payment information in step 1314 (e.g., via sending the data to a remote authorization server) and display indicia of a completed purchase in step 1315.

Process 1320 may be provided and may include step 1321, in which a GUI receives touch signals. Step 1322 may be included in which the GUI receives one or more payment card numbers. This communication may be, for example, an insecure communication. The GUI may receive a time-based or use-based code and may process the card number with this code in step 1324. Persons skilled in the art will appreciate that additional information may be utilized to process a purchase such as, for example, an expiration date and/or a zip code. Step 1325 may be included in which the GUI displays indicia representative of the completed purchase.

Process 1330 may be provided and may include step 1331, in which a GUI may receive touch signals. The GUI may receive a payment card number in step 1332, a time-based or use-based code in step 1333, and a payment option in step 1334. For example, a payment option may be to pay for a purchase using points instead of the user's credit line. As per another example, a payment option may be to pay for a purchase in a particular number of installments. Data may be processed and the GUI may display indicia indicative of a completed purchase in step 1335. Persons skilled in the art will appreciate that a completed purchase may include the display of an electronic receipt and information may be communicated to the card (e.g., via light) so the card may include an updated credit balance, point balance, or any other information update.

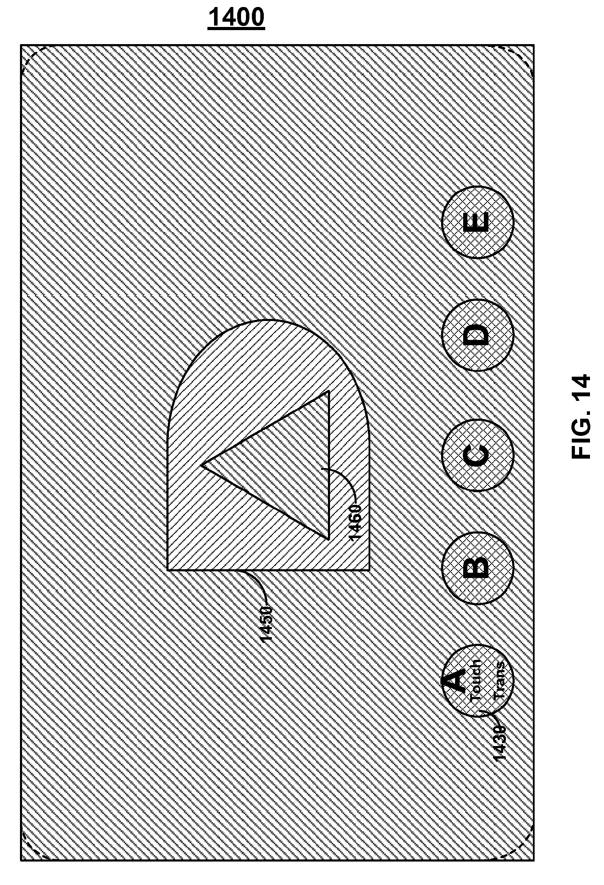

FIG. 14 shows card 1400 that may include a display located substantially over one or both sides of the card. Indicia 1450 may be displayed and may include light communication area 1460. Card 1400 may include capacitive touch buttons such as capacitive touch button 1430. Capacitive touch button 1430 may also be controlled, for example, to activate a capacitive touch sensor on another card or device. Similarly, for example, a touch screen of a mobile phone may be provided and operated, for example, to electronically touch a capacitive touch screen of a different mobile phone (or card).

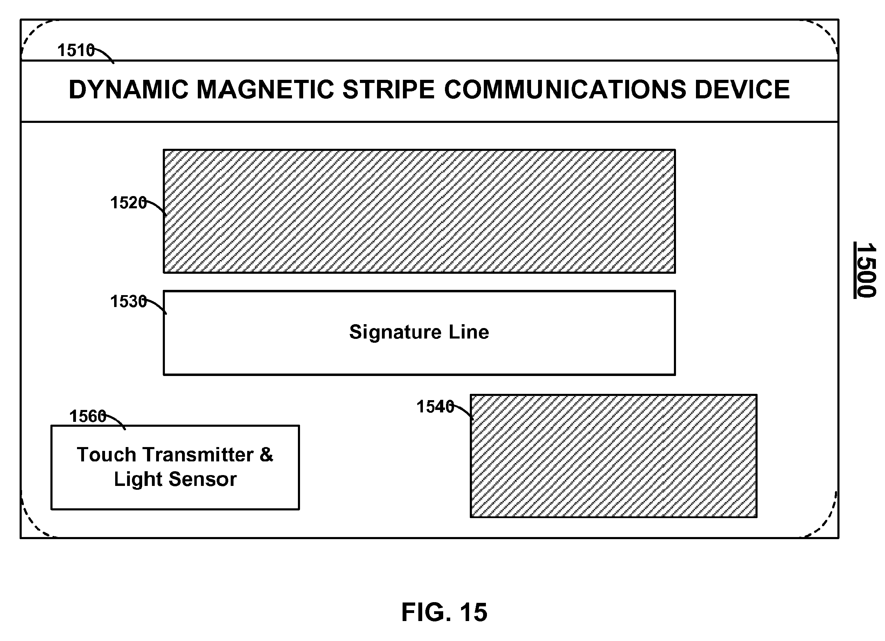

FIG. 15 shows card 1500 that may include a side with signature line 1530, displays 1520 and 1540, dynamic magnetic stripe communications device 1510, and touch transmitter and light sensor 1560. Persons skilled in the art will appreciate that a touch transmitter and light sensor may be directed to receive and communicate information from a reverse side of a card such that a user may hold a card to a display and press a button on the card to initiate transfer. The card may include a source of light (e.g., LED) on the obverse side of the card to indicate when communication to a display via touch has begun, is underway, and has completed.

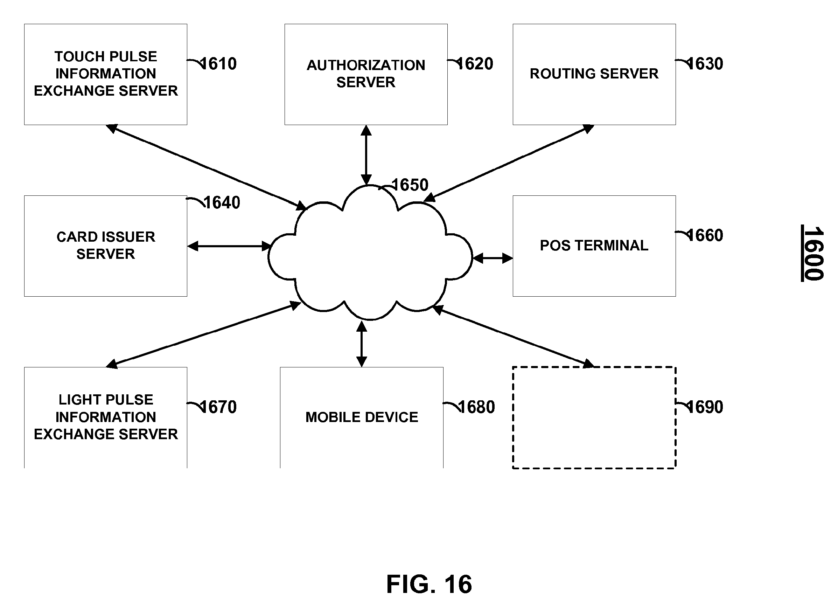

FIG. 16 shows topology 1600 that may include touch pulse information exchange server 1610, card issuer server 1640, light pulse information exchange server 1670, communication network 1650, authorization server 1620, routing server 1630, POS terminal 1660, mobile device 1680 (e.g., a battery-powered card, a mobile telephonic device, or computing device), and any other device 1690 (e.g., a promotional issuance or rewards management server).

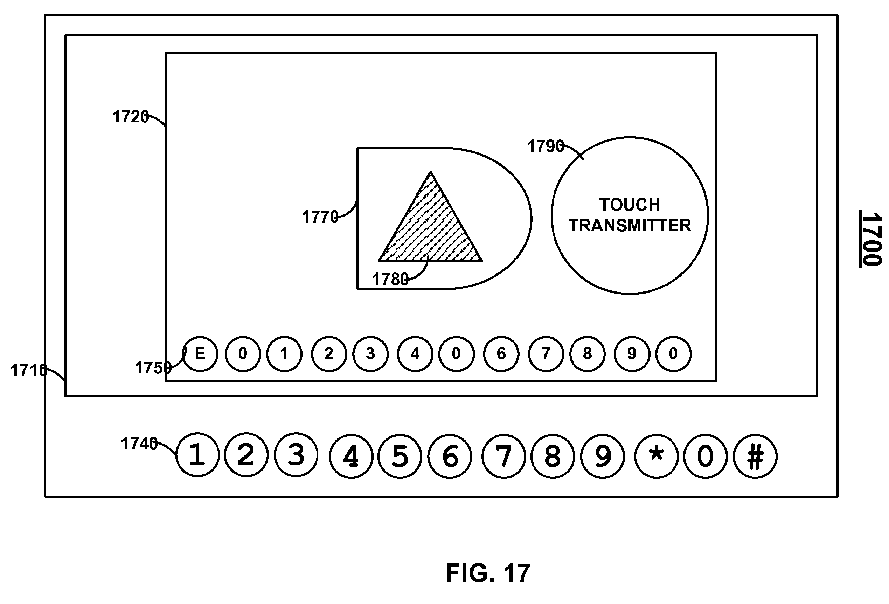

FIG. 17 shows device 1700 which may be, for example, a mobile phone having a touch sensitive display 1710, physical buttons 1740, and virtual capacitive touch buttons 1750 on virtual card 1720. Light communications may occur, for example, in area 1780 of indicia 1770. One or more capacitive touch sensors may also, for example, be controlled to communicate touch pulses (e.g., touch transmitter area 1780).

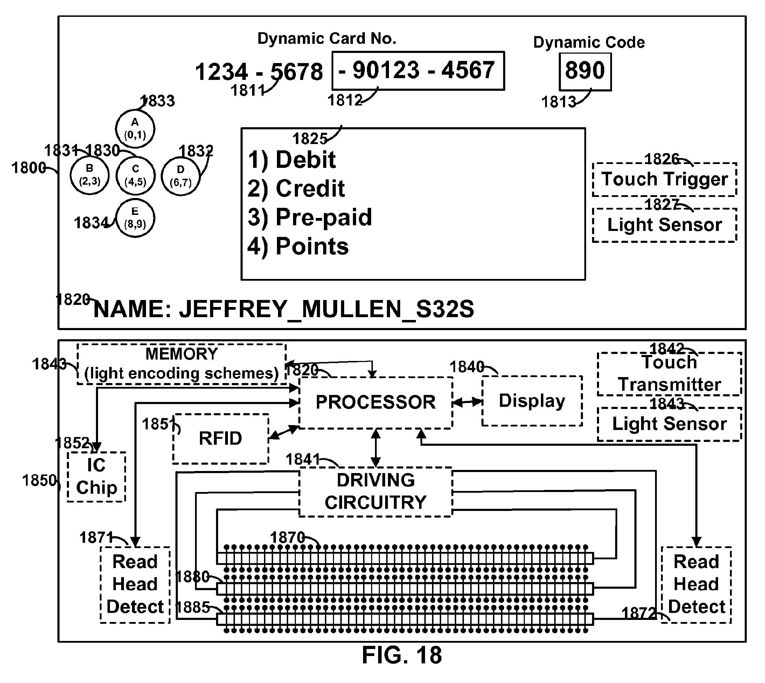

FIG. 18 shows card 1800 that may include, for example, a dynamic number that may be entirely, or partially, displayed via display 1812. A dynamic number may include a permanent portion such as, for example, permanent portion 1811. Permanent portion 1811 may be printed as well as embossed or laser etched on card 1800. Multiple displays may be provided on a card. For example, display 1813 may be utilized to display a dynamic code such as a dynamic security code. Display 1825 may also be provided to display logos, barcodes, as well as multiple lines of information. A display may be a bi-stable display or non bi-stable display. Permanent information 1820 may also be included and may include information such as information specific to a user (e.g., a user's name or username) or information specific to a card (e.g., a card issue date and/or a card expiration date). Card 1800 may include one or more buttons such as buttons 1830-1834. Such buttons may be mechanical buttons, capacitive buttons, or a combination or mechanical and capacitive buttons. A button (e.g., button 1830) may be used, for example, to communicate information through a dynamic magnetic stripe communications device indicative of a user's desire to communicate a single track of magnetic stripe information. Persons skilled in the art will appreciate that pressing a button (e.g., button 1830) may cause information to be communicated through a dynamic magnetic stripe communications device when an associated read-head detector detects the presence of a read-head of a magnetic stripe reader. Another button (e.g., button 1831) may be utilized to communicate (e.g., after button 1831 is pressed and after a read-head detects a read-head of a reader) information indicative of a user selection (e.g., to communicate two tracks of magnetic stripe data). Multiple buttons may be provided on a card and each button may be associated with different user selections.

Architecture 1850 may be utilized with any card. Architecture 1850 may include processor 1820. Processor 1820 may have on-board memory for storing information (e.g., drive code). Any number of components may communicate to processor 1820 and/or may receive communications from processor 1820. For example, one or more displays (e.g., display 1840) may be coupled to processor 1820. Persons skilled in the art will appreciate that components may be placed between particular components and processor 1820. For example, a display driver circuit may be coupled between display 1840 and processor 1820. Memory 1843 may be coupled to processor 1820. Memory 1843 may include data that is unique to a particular card. For example, memory 1843 may store discretionary data codes associated with buttons of a card (e.g., card 1800 of FIG. 18). Such codes may be recognized by remote servers to effect particular actions. For example, a code may be stored on memory 1843 that causes a promotion to be implemented by a remote server (e.g., a remote server coupled to a card issuer's website). Memory 1843 may store types of promotions that a user may have downloaded to the device and selected on the device for use. Each promotion may be associated with a button. Or, for example, a user may scroll through a list of promotions on a display on the front of the card (e.g., using buttons to scroll through the list). A user may select the type of payment on card 1800 via manual input interfaces corresponding to displayed options on display 1825. Selected information may be communicated to a magnetic stripe reader via a dynamic magnetic stripe communications device. Selected information may also be communicated to a device (e.g., a mobile telephonic device) having a capacitive sensor or other type of touch sensitive sensor.

Card 1800 may include, for example, any number of touch triggers 1826 or light sensors 1827. Touch triggers 1826 may be utilized, for example, to activate and deactivate a touch sensor on a capacitive, or other, touch screen. In doing so, a device having a touch screen may believe that a user is physically providing physical instructions to the device when a card is actually providing physical instructions to the device. Light sensors 1827 may be utilized such that a display screen, or other light emitting device, may communicate information to light sensors 1827 via light.

Any number of reader communication devices may be included in architecture 1850. For example, IC chip 1852 may be included to communicate information to an IC chip reader. IC chip 1852 may be, for example, an EMV chip. As per another example, RFID 1851 may be included to communicate information to an RFID reader. A magnetic stripe communications device may also be included to communicate information to a magnetic stripe reader. Such a magnetic stripe communications device may provide electromagnetic signals to a magnetic stripe reader. Different electromagnetic signals may be communicated to a magnetic stripe reader to provide different tracks of data. For example, electromagnetic field generators 1870, 1880, and 1885 may be included to communicate separate tracks of information to a magnetic stripe reader. Such electromagnetic field generators may include a coil wrapped around one or more materials (e.g., a soft-magnetic material and a non-magnetic material). Each electromagnetic field generator may communicate information serially to a receiver of a magnetic stripe reader for particular magnetic stripe track. Read-head detectors 1871 and 1872 may be utilized to sense the presence of a magnetic stripe reader (e.g., a read-head housing of a magnetic stripe reader). This sensed information may be communicated to processor 1820 to cause processor 1820 to communicate information serially from electromagnetic generators 1870, 1880, and 1885 to magnetic stripe track receivers in a read-head housing of a magnetic stripe reader. Accordingly, a magnetic stripe communications device may change the information communicated to a magnetic stripe reader at any time. Processor 1820 may, for example, communicate user-specific and card-specific information through RFID 1851, IC chip 1852, and electromagnetic generators 1870, 1880, and 1885 to card readers coupled to remote information processing servers (e.g., purchase authorization servers). Driving circuitry 1841 may be utilized by processor 1820, for example, to control electromagnetic generators 1870, 1880, and 1885.

Architecture 1850 may also include, for example, touch transmitter 1842 as well as light sensor 1843. Architecture 1850 may communicate information from touch transmitter 1842 as well as receive information from light sensor 1843. Processor 1820 may communicate information through touch transmitter 1842 and determine information received by light sensor 1843. Processor 1820 may store information on memory to later be, for example, communicated via touch transmitter 1842.

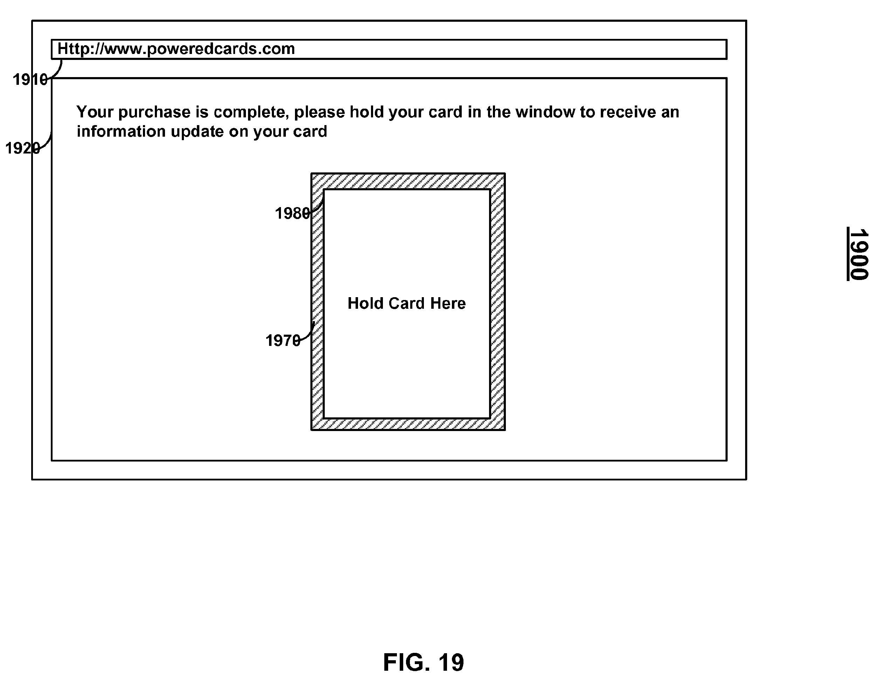

FIG. 19 shows graphical user interface (GUI) 1900 that may be displayed, for example, from a stationary or portable computer, a mobile telephonic phone, a tablet computer, a navigational system, a watch, a card, or any device having a display screen. Graphical user interface 1900 may be hosted from a server and may communicate with a number of additional servers. For example, graphical user interface 1900 may be provided on a web browser, or other application run from a device, to complete a purchase transaction. GUI 1900 may be provided upon the completion of a purchase to communicate update information back to a card. Such information may include, for example, an update points balance, credit balance, debit balance, pre-paid balance, or any other update information. Information may be communicated via light, for example, in light communication area 1980. Status indication area 1970 may be utilized to communicate information to a user while a card is held against a display. For example, status indication area 1970 may change colors, or provide a different form of visual indicia, depending on if a update is starting, in the process of communication, or has completed communicating.

One or more light sensors or touch transmitters may be located on a card or other device. For example, a touch transmitter may be located at approximately opposite ends of a card as another touch transmitter. A light sensor may, for example, be located at approximately the opposite end of a card as a touch transmitter. A user may activate a button (e.g., a download button) to start communicating data via the touch transmitter. A button may be a physical button, a capacitive touch button, or any other type of button.

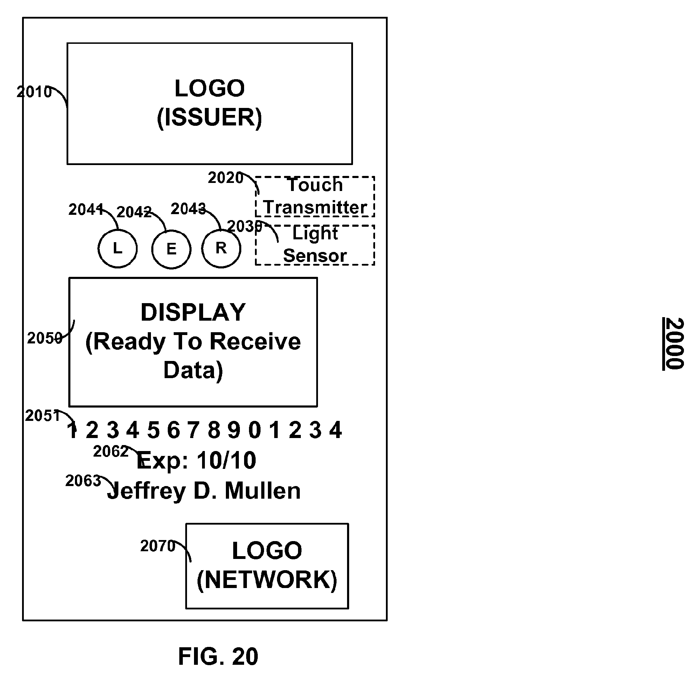

FIG. 20 shows card 2000, which may be provided in a vertical configuration. Card 2000 may include, for example, issuer logo 2010, network logo 2070, display 2050, manual input interfaces 2041-2043, touch transmitter 2020, light sensor 2030, permanent indicia 2051, 2062, and 2063. Persons skilled in the art will appreciate that any permanent indicia may be provided via display 2050. For example, one or more payment card numbers, user name, expiration date, and security codes may be provided via display 2050.

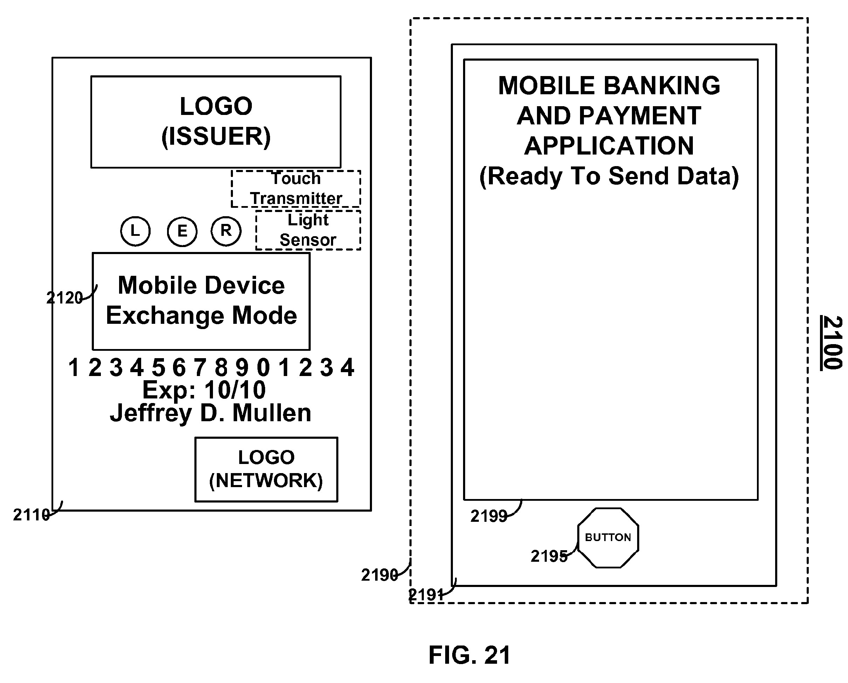

FIG. 21 shows system 2100 that may include mobile telephonic device 2190 and device 2110 (e.g., a payment card). Device 2110 may include, for example, display 2120 that may display status indicative of a communication. A touch transmitter and/or light sensor may be provided on a surface of device 2110 opposite display 2120. In this manner, for example, device 2110 may communicate with mobile telephonic device 2190 as device 2110 is held against device 2190, but device 2110 may communicate information indicative of the status of a communication via display 2120.

Device 2190 may include housing 2191, button 2195, and capacitive touch display screen 2199. Device 2110 may utilize a touch transmitter to, for example, communicate information to mobile telephonic device 2190. Persons skilled in the art will appreciate that a mobile banking application may be utilized on mobile telephonic device 2190. Device 2110 may be utilized to properly identify a person securely in order to reduce fraud. Accordingly, device 2110 may communicate identification information and security codes, such as time based or used based codes, to device 2190 via display 2199. Accordingly, such an identification may be required, for example, by a banking application in order to gain access to banking information, execute a financial trade (e.g., a stock or option trade), transfer money, or pay a bill via an electronic check.

Persons skilled in the art will appreciate that multiple touch transmitters may communicate data simultaneously in parallel to a touch screen. Similarly, for example, multiple light sensors may receive data simultaneously in parallel from a display screen. The information may be, for example, different or the same. By communicating the same information through different touch transmitters, a device may receive two messages and confirm receipt of a communication if the two messages are the same. Touch transmitters may be utilized, for example, by software on a device to determine the positioning of a device on an associated touch screen. Similarly, light sensors may be utilized, for example, to receive information indicative of the positioning of a device on an associated touch screen.

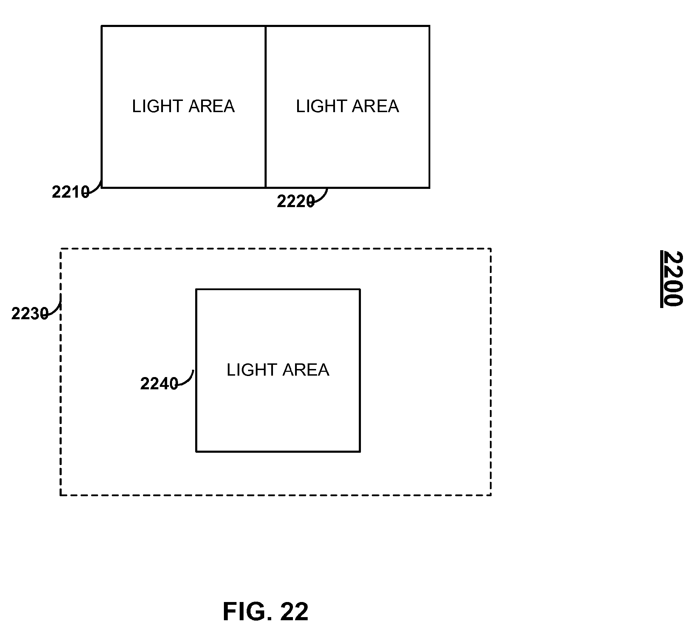

FIG. 22 shows system 2200 that may include a device having a display screen displaying light communication areas 2210 and 2220. Areas 2210 and 2220 may change color, for example, to communicate data. A card may include corresponding light sensors, or arrays of light sensors, in order to receive data from light areas 2210 and 2220. Data may be determined for example, based on the combination of colors provided in the light regions. For example, a particular combination of colors may be associated with a particular data (e.g., a particular bit) and a different combination of colors may be associated with a different data (e.g., a different bit). A combination of colors may be utilized as a transition. Such a transition combination may be utilized, for example, to indicate to a card, or other device, the separation of data. For example, two regions may be provided. Both regions being determined to be black may be associated with a transition. One region being white while the other is black may be determined to be associated with one bit of information. One region being black while the other is white may be determined to be associated with a different bit of information. Both regions being white may be utilized to convey the beginning and/or ending of a message. A two color scheme may be utilized. More than two colors may be utilized. Furthermore, for example, a card, or other device, may be able to receive information regardless of the colors used. For example, information may be discerned based on the colors being different. As such, both colors being the same may be utilized as one bit of information while both colors being different may be utilized as a different bit of information. In doing so, for example, the same communication encoding method may be utilized regardless of the type of display utilized (e.g., a several color display or a black/white or a green/yellow display). A clock may be utilized to determine timing information. Such a clock may be a clock internal to a processor. Such a clock may alternatively be a clock separate from the processor.

A processor may be configured, for example, to operate in the range of approximately 1 megahertz to 30 megahertz (e.g., approximately 2-5 megahertz). A battery may be utilized to power the card or other device. A payment card (e.g., a debit, credit, pre-paid, and/or gift card) may be provided to a customer (e.g., mailed to a customer) with a battery charged between 3 and 4.5 volts (e.g., between approximately 3.2 and 4.2 volts). An electronics package may be laminated into a card after a battery is charged. For example, an electronics package may be laminated into a card via a hot or cold lamination process. An electronics package may be laminated into a card via an injection molding process utilizing one or more liquid laminates that are hardened via a light, temperature, pressure, time-based, chemical, or other reaction.

System 2230 may be included and may include a device having a display that displays light communication area 2240. Light communication area 2240 may communicate information via light pulses. Such light pulses may communicate data serially. Persons skilled in the art will appreciate that a single light area and a single, or an array of light sensors, for that single area may be utilized on a device regardless of screen size. A user may place a card's light sensor, or array of light sensors, against area 540 and may receive data from area 2240 as light is pulsed to the card. Information may be communicated, for example, via frequency double-frequency encoding. For example, transitions may be determined by a processor and the periods of time between these transitions may be utilized as data. For example, a "short" interval may be discerned as one type of bit of data (e.g., a "0") while a "long" interval may be discerned as a different type of bit of data (e.g., a "1"). A transition may be determined, for example, as the change of one color to another color (e.g., black to white and white to black) or from one particular color to another particular color (e.g., black to white but not white to black).

Any type of device with a display may be utilized to communicate information from a card, or other device, via light. For example, a television, mobile telephonic phone, personal computer (e.g., stationary, portable laptop, or portable tablet computer), automated-teller-machine device, electronic register device, or any other type of electronic device. Information may be communicated via light regions provided in webpages, software applications, television streams (e.g., during a commercial or a television show), or any other display screen or user interface.

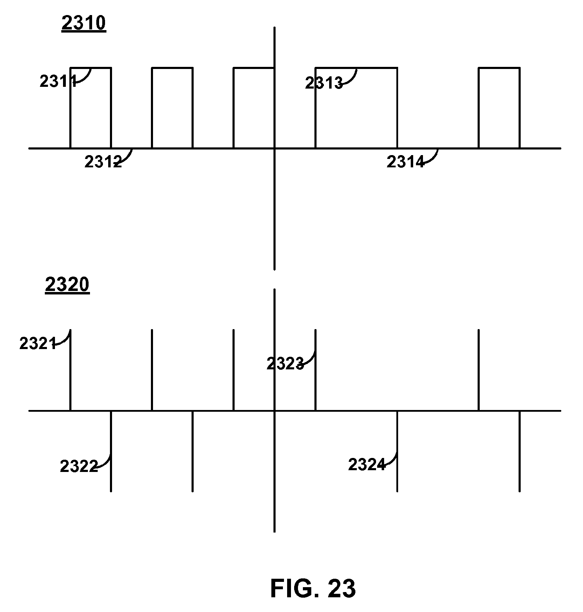

FIG. 23 shows signal 2310 and signal 2320. Signals 2310 and 2320 may be communicated, for example, from a single light area on a display to a single light sensor on a card, or other device. Signal 2310 may communicate information via the length of a pulse of a particular color (e.g., white) with a baseline width of a different color (e.g., black) (e.g., pulses 2311 and 2312). Signal 2310 may, alternatively, communicate information with long durations and short durations of two colors. For example, a short duration of white followed by a short duration of black may be one bit while a long duration of white followed by a long duration of black may be another bit (e.g., pulses 2313 and 2314). Signal 2320 may, for example, communicate information via the time durations between transitions from one state (e.g., white) to another color state (e.g., black). Short durations may be one bit (e.g., "0") while long durations may be another bit (e.g., "1"). In doing so, for example, frequency double-frequency encoding may be realized (e.g., via pulses 2321-2324).

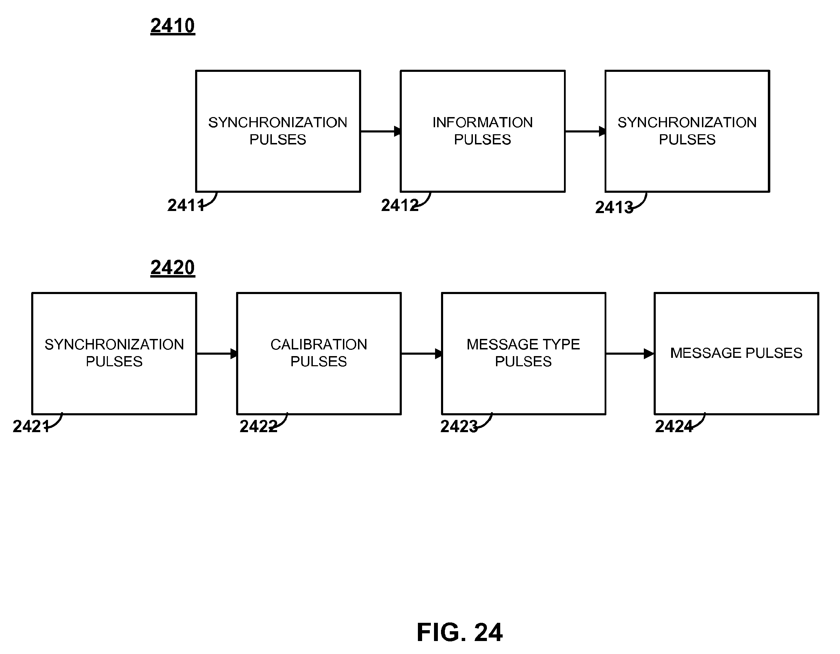

FIG. 24 shows data streams 2410 and 2420. Data stream 2410 may include synchronization pulses 2411, information pulses 2412, and synchronization pulses 2413. Persons skilled in the art will appreciate that synchronization pulses may be provided as a string of a particular bit (e.g., a string of "0"s). In doing so, for example, a card may determine the duration of transition changes associated with that bit such that information may be properly discerned by the card. In this manner, information may be communicated, via light, regardless of the frame rate of the display screen communicating the information. Stream 2420 may include synchronization pulses 2421, calibration pulses 2422, message type pulses 2423, and message pulses 2424. Message type pulse may identify the type of data included in the subsequent message pulse. In doing so, for example, the message pulse may be properly identified and routed for processing. Calibration pulses 2422 may be utilized by a card, for example, to discern more information about the capabilities of a display, how colors are displayed, backlighting attributes, and/or ambient light and optical noise. Persons skilled in the art will appreciate that calibration pulses may also be synchronization pulses and synchronization pulses may have different, particular attributes (e.g., brightness or depth of color) such that calibration may occur more efficiently and effectively. Persons skilled in the art will also appreciate that black and white pulses may be utilized on both several color displays and black and white displays.

Numerous applications may be realized utilizing, for example, light pulses to communicate light to a card or between cards (or other devices). For example, a card may receive information via light indicative of a payment card number (e.g., a credit, debit, pre-paid, and/or gift card number). In doing so, a payment card number may be remotely issued to a card via, for example, a mobile device or a portable computer. A payment card number may be remotely issued, for example, via a web browser when, for example, a payment card number is compromised or a new product is desired to be added to a card (e.g., a new credit, debit, or pre-paid product). Alerts may be communicated via light and received by a card. An alert may instruct a card to provide a particular visible alert (e.g., a light blinking or particular indicia to be provided on a display) upon receipt, at a particular time, or a particular frequency. Such an alert, for example, may be indicative of a new promotion that is awaiting a user. Promotions, coupons, and advertisements may also be downloaded to a card via light. Games may be played on a card and game information may be communicated via light. For example, a casino loyalty card may receive a particular code via light and this code may correspond to a game loss or a game win of a particular amount. The code may be utilized by a game on the card (e.g., to roll dice on a display or spin a slot machine on a display). Features may be added or switched on a card. For example, a user may add a feature enabling the user to pay for a purchase with points, in installments, via a deferred pay, debit pay, prepaid pay, or credit pay. Such features may be switched, for example, on the back-end such that information may not be required to be communicated to the card. For example, a user may go online and switch the feature utilized upon the selection of a particular button on the card. In communicating the information via light, however, the card may utilize the information to provide a more functional card. For example, a display located next to a button may change the information displayed to be indicative of a new feature such that a user does not have to remember the features associated with particular buttons. Information on a card may be updated. For example, a user profile (e.g., reward mile status) may be updated via light pulses. Software on a card may be updated via light pulses. A user may utilize a particular code to unlock a card by entering this code into buttons. The code may be changed via light pulses. Similarly a card may become locked until a code is entered into the card that the user is not aware of. This code may be communicated to a card via light pulses to unlock the card. Timing information may be communicated to a card (e.g., the date and time of transmission) such that a card may update and resynchronize an internal clock. Value may be added, and stored, on a card via light information. For example, pre-paid or gift amounts may be added to a card. A card may receive a hotel key via light, for example, when a user pays for a hotel room. An online check-in feature may be provided via a hotel reservation center such that the hotel may download the room key directly to the card. In doing so, a user may simply go directly to his/her room when the user reaches the hotel. Frequent flier status and/or miles may be communicated via light. Insurance information, medical records, or other medical information may be communicated to a card via light. Transit information such as subway value/tokens, train value/tokens, ferry value/tokens may be added to a card via light or other wireless communication into a card. A transit number (e.g., a monthly pass number) may be added to a card via light (e.g., or sound). Person-to-person payments may be made via two cards (e.g., via light sensors and sources of light on the cards). Advertisements may be communicated to a card via light. Light may be communicated, for example, via a single color of light. For example, a light source (e.g., an LED) of a card, or other device, may communicate information to another card, or device, by turning that light source ON and OFF in a pattern recognizable by the other device. A device may be operable to receive information using different schemes of light communication. A processor of a device receiving a particular scheme may utilize knowledge of each scheme to determine the scheme being utilized. In doing so, the processor may determine, for example, the type of device sending the communications. In this manner, for example, a card may be able to discern when the card is receiving information from a card or a non-card device. Different types of devices may have different types of handshakes and security. As such, for example, different types of applications (e.g., payment applications) may be utilized by the device based on the level of security of the communication.

A card, or other device, may be programmed with application code before the electronics package is laminated into a card. The card, or other device, may receive payment card information (e.g., a credit, debit, pre-paid, and/or gift card number) after the electronics package is laminated into a card. In doing so, for example, different facilities may be utilized to laminate and personalize the cards.

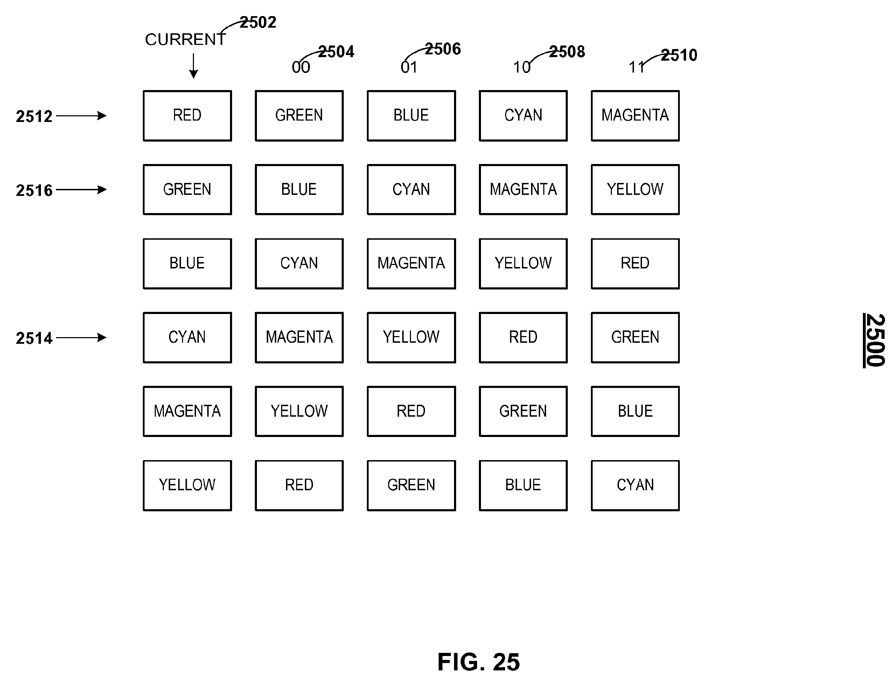

FIG. 25 shows color encoding scheme 2500. Color encoding scheme 2500 may, for example, be implemented by a light source capable of generating multiple colors of light. A light sensor may, for example, detect each color of light generated by such a light source and may, for example, discern information communicated based upon the color of light detected. Accordingly, for example, each color of light may exhibit a characteristic (e.g., wavelength) that may be detected by a light sensor and communicated to a processor. In so doing, data may be communicated from a light source to a processor using changes in light characteristics (e.g., changes in the color and/or intensity of light generated).

A data sequence may be associated with a color and/or a color transition, such that a number of data bits (e.g., two data bits) may be communicated based upon the particular color and/or color transition generated. Accordingly, for example, data sequences may be encoded based upon a color of light that may be initially generated by a light source and a color of light that may be generated subsequent to the initially generated color of light.

Color encoding scheme 2500 illustrates multiple colors (e.g., six colors) that may be generated by a light source. Other colors (e.g., black and white) may also be generated by the light source. Each color and/or color transition may, for example, be encoded with a bit sequence, such that a light sensor and associated processor that detects each color and/or each color transition may decode the detected color and/or color transition into its associated data sequence. Accordingly, for example, multiple data bits (e.g., four bits of data) may be communicated by generating a first frame of light having a first color followed by generating a second frame of light having a second color in accordance with color encoding scheme 800. In so doing, for example, four bits of data may be communicated by generating two colors of light in two adjacent frames.

Any data sequence may, for example, be communicated by a light source by first generating a start sequence (e.g., generating a black pulse followed by a white pulse or generating a white pulse followed by a black pulse). The next color generated by the light source may represent the first two data bits communicated by the light source as illustrated, for example, by columns 2504-2510 of row 2512. Accordingly, for example, a light source may communicate data sequence 2504 (e.g., "00") if the color "green" is generated after a start sequence, a light source may communicate data sequence 2506 (e.g., "01") if the color "blue" is generated after a start sequence, a light source may communicate data sequence 2508 (e.g., "10") if the color "cyan" is generated after a start sequence, and a light source may communicate data sequence 2510 (e.g., "11") if the color "magenta" is generated after a start sequence.

Subsequent data bits may be communicated, for example, based upon a color transition exhibited by a light source in accordance with color encoding scheme 2500. Accordingly, for example, column 2502 may illustrate a current color being generated by a light source and based upon a color transition from one of the colors in column 2502 to a subsequent color, the next data bits (e.g., the next two data bits) may be encoded. As per an example, the color "cyan" may be generated by a light source subsequent to a start sequence, which may be encoded as data sequence 2508 (e.g., "10") from row 2512. A subsequent color transition from "cyan" to "green" may be encoded as data sequence 2510 (e.g., "11") as indicated by row 2514. A subsequent color transition from "green" to "yellow" may be encoded as data sequence 2510 (e.g., "11") as indicated by row 2516. In so doing, for example, each color transition from a current color to a subsequent color may be encoded as multiple data bits

(e.g., two data bits), such that two data bits may be encoded for each color change.

Rather than using color, light intensities may be used. Accordingly, for example, color encoding scheme 2500 may be replaced with a light intensity encoding scheme, whereby light intensities instead of color may be used to encode data. In so doing, for example, a single color (e.g., "red") may be used as a carrier, where a brightness of the carrier may be used to encode the carrier with actual data. In so doing, multiple light intensities (e.g., six different brightness levels) may be used to encode data. Persons skilled in the art will appreciate that a larger variety of colors (or intensities) may yield a larger number of data bits that may be encoded per frame of light generated by the light source. Persons skilled in the art will further appreciate that variances in data communication rates between a light source and a light sensor may be tolerated since color transitions (or intensity transitions) may be used to indicate data boundaries. In addition, a degree of error correction may be implemented by color encoding scheme 800 (or an intensity encoding scheme) since not all color transitions (or intensity transitions) may be valid.

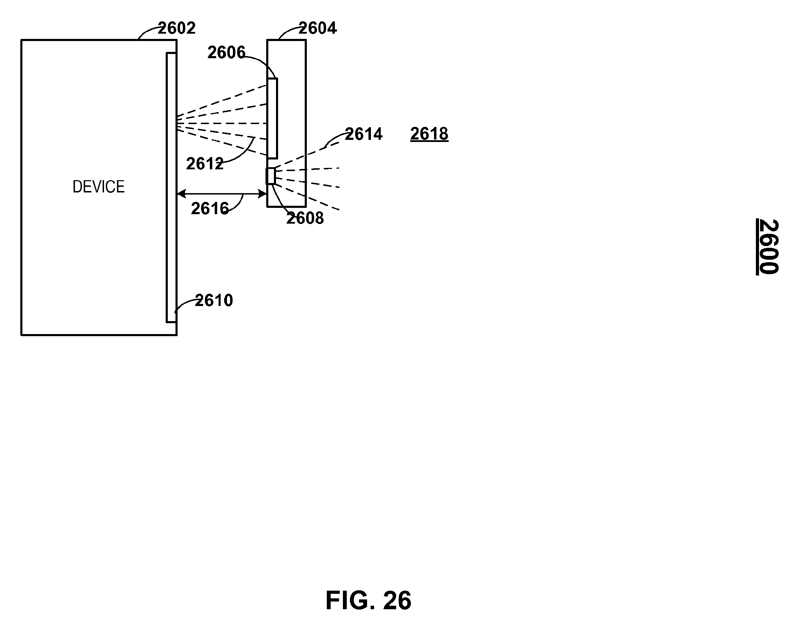

FIG. 26 shows system 2600, which may include device 2602 having display 2610, card (or other device) 2604 having light sensor 2606 and status indicator 2608. Device 2602 may, for example, include display 2610 that may generate light (e.g., pulses of light 2612) from any portion of display 2610. Light sensor 2606 may, for example, be operative to detect light (e.g., pulses of light 2612) as generated by display 2610. Status indicator 2608 (e.g., an LED) may, for example, generate status information concerning data communicated via light pulses 2612. Accordingly, for example, a processor of card 2604 may determine whether light pulses 2612 are being detected and further may decode light pulses 2612 as data communicated by device 2602 to card 2604. In so doing, for example, a status of a detection of light pulses 2612 and/or a status of decoding light pulses 2612 into communicated data may be generated by a processor and indicated by status indicator 2608 (e.g., LED 2608 may generate green light 2614 if data communication and data decoding is successful). Status indicator 2608 (e.g., an LED) may, for example, be provided as a back-facing LED, such that communication status may be indicated on side 2618 of card 2604 (e.g., through card 2604) while data communication between card 2604 and device 2602 may be conducted on an opposite side of card 2604.

Light sensor 2606 (and other electronic components) may, for example, be electrically and/or mechanically bonded to a printed circuit board of card 2604 to form an electronic assembly. Such an electronic assembly may be encapsulated by an injection molding process (e.g., an injection molding process based on a reaction of two materials or one material). For example, a silicon-based material or a polyurethane-based material may be injected and cured (e.g., using a temperature, light, pressure, time-based, and/or chemical reaction) to form the electronics package. The electronics package (and other components of card 2604) may be sandwiched between layers of laminate (e.g., layers of polymer laminate), such that both surfaces of card 2604 may be formed by a layer of laminate. An injection process may inject material between such layers of polymer. An injection process may, for example, place an electronics package on one layer of polymer, inject one or more injection laminate materials over the electronics package, and then place a different layer of polymer over the electronics package covered in one or more liquid injection laminates. A reaction may then occur to harden the structure into a card.

The electronics package may be formed via a lamination process into other structures such as, for example, a mobile telephonic device, portable tablet computer, portable laptop computer, watch, any other type of electronic device, or any part of any electronic device. Light sensor 2606 may, for example, be sensitive to light pulses 2612 even when light sensor 2606 is buried below one or more layers of laminate material. A card may be printed with indicia. Areas that may block light to a light sensor may be printed, for example, with lighter colors. Alternatively, no printing ink/material may be placed above a light sensor such that the light sensor may receive light unimpeded by print ink/material. One or more light sensors may be provided on one side of a card while one or more touch transmitters may be provided on the opposite side of a card. One or more light sensors may be provided on the same side of a card as one or more touch transmitters. One or more sources of light may be placed on the same or different sides as one or more light sensors. In placing a light sensor on a different side as a light source, a user may hold the light sensor side of the card to a display and receive a visual indication via one or more light sensors (or displays) on the back of the card that an action has occurred (e.g., a communication has not yet begun, a communication has begun, a communication is in progress, a communication is complete, a communication has failed, a communication was correctly completed).

Light sensor 2606 may, for example, be sensitive to a wide frequency range of signals. For example, device 2602 may refresh display 2610 at a particular rate (e.g., 50 or 60 Hz) such that refresh rate noise may be detected by light sensor 2606. As per another example, display 2610 may provide back lighting that may be controlled (e.g., pulse width modulated) at another frequency rate (e.g., hundreds of Hz to thousands of Hz) such that back-lighting control noise may be detected by light sensor 2606. As per yet another example, a scrolling refresh rate may be exhibited by display 2610, whereby pixels of display 910 may be refreshed in a left-to-right, top-to-bottom sequence, thereby affecting a color or intensity of light pulses 2612. Accordingly, for example, a processor of card 2604 may execute an application (e.g., a digital signal processing application) that may be used to cancel (e.g., filter out) such noise effects.

Light sensor 2606 may detect light pulses 2612 at a varying distance 2616. For example, display 2610 may generate light pulses having a high intensity, such that distance 2616 may be maximized (e.g., card 2604 may be held further away from display 2610 to detect light pulses 2612 having a relatively high intensity). Alternately, for example, display 2610 may generate light pulses having a low intensity, such that distance 2616 may be minimized (e.g., card 2604 may be held closer to display 2610 to detect light pulses 2612 having a relatively low intensity). Ambient light (e.g., light not generated by display 2610) may also decrease distance 2616 (e.g., card 2604 may need to be held closer to display 2610 in the presence of ambient light) to allow detection of light pulses 2612.

A user may, for example, utilize status indicator 2608 to determine whether distance 2616 is adequate to support reliable data communication between device 2602 and card 2604. Accordingly, for example, if distance 2616 is too large to support reliable data communication, status indicator 2608 (e.g., an LED) may indicate such a status (e.g., illuminate red light). Alternately, for example, if distance 2616 is adequate to support reliable data communication, status indicator 2608 (e.g., an LED) may indicate such a status (e.g., illuminate green light). In so doing, for example, a user of card 2604 may obtain communication status from status indicator 2608, so that the user may bring card 2604 within an acceptable communication distance 2616 of device 2602.

A processor may determine a color by receiving one or more samples of light within a particular range of wavelengths. Multiple samples may be averaged together during a sampling interval to determine an average wavelength or other characteristic (e.g., intensity) and this average characteristic over a period of time, may be utilized for determination calculations. A particular number of samples may be taken (e.g., two, three, four, or more than four) and averaged together and the average of these samples may be utilized by a processor to make determinations.

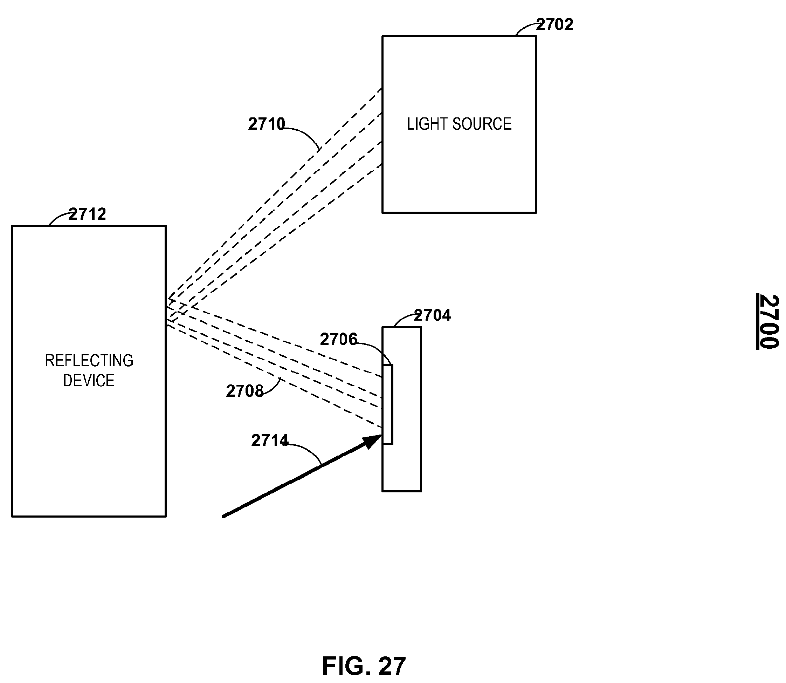

FIG. 27 shows system 2700, which may include light source 2702, card (or other device) 2704 having light sensor 2706, and reflecting device 2712. Light source 2702 may, for example, provide light pulses 2710 that may be detected by light sensor 2706 as reflected light pulses 2708. Accordingly, for example, light sensor 2706 of card 2704 may receive communicated data from devices that may use a projection medium (e.g., a projection TV). Other light sources may, for example, generate ambient light 2714 that may be detected by light sensor 2706. Accordingly, for example, a processor of card 2704 may use filtering (e.g., a digital signal processing algorithm) to cancel the effects of ambient light 2714 so that data encoded within light pulses 2708 may be more accurately detected and decoded by the processor.

Persons skilled in the art will also appreciate that the present invention is not limited to only the embodiments described. Instead, the present invention more generally involves dynamic information. Persons skilled in the art will also appreciate that the apparatus of the present invention may be implemented in other ways then those described herein. All such modifications are within the scope of the present invention, which is limited only by the claims that follow.

### Additional Statements

There is provided a card comprising: a processor; memory; and a touch transmitter operable to electrically communicate information stored in said memory to a touch sensitive screen via control signals received from said processor.

Preferably, wherein said information is payment information.

Preferably, wherein said touch transmitter includes a transistor coupled to a conductive plate, wherein said processor deactivates said transistor to decrease a capacitance of said conductive plate below a capacitance threshold.

Preferably, wherein said touch transmitter includes a transistor coupled to a conductive plate, wherein said processor activates said transistor to increase a capacitance of said conductive plate above a capacitance threshold.

Preferably, wherein said touch transmitter includes a transistor having an isolation circuit coupled between a control terminal of said transistor and said processor.

There is provided a system comprising: a card including a touch transmitter; and a device including a touch-sensitive screen, wherein said touch transmitter is operable to communicate information from said card to said device via said touch sensitive screen.

Preferably, wherein said information is payment information.

Preferably, wherein said information is payment information used by said device to complete a purchase transaction.

Preferably, wherein information is authentication information.

Preferably, wherein said information is authentication information used by device to authorize a function performed by said device.

Preferably, wherein said touch-sensitive screen includes a predetermined location operable to receive said communicated information.

Preferably, wherein any portion of said touch-sensitive screen is operable to receive said communicated information.

Preferably, wherein said touch-sensitive screen includes a status indicator operable to indicate a status of said communicated information.

Preferably, wherein said touch-sensitive screen includes a status indicator operable to indicate a status of said communicated information, wherein said status indicator indicates whether said communicated information is received.

Preferably, wherein said touch-sensitive screen includes a status indicator operable to indicate a status of said communicated information, wherein said status indicator indicates whether said communicated information is valid.

There is provided a method comprising: placing a card against a device; simulating a touch by said card; detecting said simulated touch by said device; and storing said detection within said device as data communicated by said card to said device.

Preferably, wherein simulating a touch includes increasing a capacitance of a conductive plate of said card above a capacitance threshold.

Preferably, wherein said communicated data is payment information used by said device to complete a purchase transaction.

Preferably, wherein said communicated data is authentication information used by said device to authorize a function performed by said device.

Preferably, further comprising providing feedback from said device indicative of a status of said detection.

There is provided a card comprising: a processor; memory; and a light sensor operable to receive light signals, wherein said processor may decode said light signals, said processor may store said decoded information in memory, and said received light signals may be frequency double-frequency (F2F) encoded.

Preferably, wherein said light sensor is operable to detect multiple colors of said received light signals.

Preferably, wherein said light sensor is operable to detect multiple colors of said received light signals and said processor may decode said detected multiple colors into said decoded information.

Preferably, wherein said light sensor is operable to detect color transitions between said received light signals.

Preferably, wherein said light sensor is operable to detect color transitions between said received light signals and said processor may decode said detected color transitions into said decoded information.

Preferably, wherein said light sensor is operable to detect multiple intensities of said received light signals.

Preferably, wherein said light sensor is operable to detect multiple intensities of said received light signals and said processor may decode said detected multiple intensities into said decoded information.

There is provided a system comprising: a card including a first light sensor; and a device operable to generate light signals, wherein said card is operable to receive information from said device via said light signals detected by said first light sensor.

Preferably, wherein said card includes a processor operable to decode said information from a duration of said detected light signals.

Preferably, wherein said card includes a processor operable to decode said information from a duration between said detected light signals.

Preferably, wherein said card includes a processor operable to decode said information from a color of said detected light signals.

Preferably, wherein said card includes a processor operable to decode said information from an intensity of said detected light signals.

Preferably, wherein said card further comprises a second light sensor, wherein said card is operable to receive information from said device via said light signals detected by said first and second light sensors.

There is provided a method comprising: generating pulses of light from a device; detecting said pulses of light with a card; and decoding said detected pulses of light as information communicated from said device to said card.

Preferably, wherein a light sensor of said card detects a duration of said pulses of light and a processor of said card decodes said detected duration into said information.

Preferably, wherein a light sensor of said card detects a duration between said pulses of light and a processor of said card decodes said detected duration into said information.

Preferably, wherein a light sensor of said card detects a color of said pulses of light and a processor of said card decodes said detected color into said information.

Preferably, wherein a light sensor of said card detects a color transition between said pulses of light and a processor of said card decodes said detected color transition into said information.

Preferably, wherein a light sensor of said card detects an intensity of said pulses of light and a processor of said card decodes said detected intensity into said information.

Preferably, wherein first and second light sensors of said card detects said pulses of light and a processor of said card decodes said detected pulses of light into said information.

There is provided a card comprising: a processor means; a memory means; and a touch transmitter means operable to electrically communicate information stored in said memory means to a touch sensitive screen via control signals received from said processor.

There is provided a card comprising: a processor means; a memory means; and a light sensor means operable to receive light signals, wherein said processor means may decode said light signals, said processor means may store said decoded information in said memory means, and said received light signals may be frequency double- frequency (F2F) encoded.

## Claims

1. A card (100) comprising:
a processor (120);
memory (144); and
a touch transmitter (126) operable to electrically communicate information stored in said memory (144) to a touch sensitive screen (125) via control signals received from said processor (120).

2. The card of claim 1, wherein said information is payment information.

3. A system (400) comprising:
a card (410) including a touch transmitter; and
a device (490) including a touch-sensitive screen (499), wherein said touch transmitter is operable to communicate information from said card (410) to said device (490) via said touch sensitive screen (499).

4. The system of claim 3, wherein said information is authentication information.

5. The system of claim 3 or claim 4, wherein said touch-sensitive screen (499) includes a status indicator operable to indicate a status of said communicated information.

6. A method comprising:
placing a card against a device;
simulating a touch by said card;
detecting said simulated touch by said device; and
storing said detection within said device as data communicated by said card to said device.

7. The method of claim 6, wherein said communicated data is payment information used by said device to complete a purchase transaction.
